# EUROPEAN PATENT SPECIFICATION

(11) **EP 4 099 461 B1**
(45) Date of publication and mention of the grant of the patent: **03.07.2024**
(21) Application number: 21827368.8
(22) Date of filing: 07.04.2021
(51) Int. Cl.: H01M 10/0525, H01M 4/13, H01M 10/04, H01M 10/0587, H01M 50/107, H01M 50/471, H01M 50/474, H01M 50/477

(54) **BATTERY CELL, BATTERY, ELECTRIC DEVICE, AND METHOD AND APPARATUS FOR MANUFACTURING BATTERY CELL**
BATTERIEZELLE, BATTERIE, ELEKTRISCHE VORRICHTUNG SOWIE VERFAHREN UND VORRICHTUNG ZUR HERSTELLUNG EINER BATTERIEZELLE
ÉLÉMENT DE BATTERIE, BATTERIE, DISPOSITIF ÉLECTRIQUE, ET PROCÉDÉ ET APPAREIL DE FABRICATION D'ÉLÉMENT DE BATTERIE

(43) Date of publication of application: 07.12.2022
(73) Proprietor: Jiangsu Contemporary Amperex Technology Limited, Liyang, Jiangsu 213300 (CN)
(72) Inventor: XU, Hu, Liyang City, Changzhou, Jiangsu 213300 (CN); LIU, Xiaomei, Liyang City, Changzhou, Jiangsu 213300 (CN); JIN, Haizu, Liyang City, Changzhou, Jiangsu 213300 (CN); LIANG, Chengdu, Liyang City, Changzhou, Jiangsu 213300 (CN)
(74) Representative: Herrero & Asociados, S.L.
(86) International application number: PCT/CN2021/085851
(87) International publication number: WO 2022/213306

(56) References cited:
- CN-A- 1 461 503
- CN-A- 102 593 524
- CN-A- 106 207 016
- CN-A- 111 512 486
- CN-U- 202 503 077
- CN-U- 206 076 410
- CN-U- 207 398 186
- CN-U- 209 217 030
- JP-A- H09 266 012
- JP-A- 2010 257 733
- KR-A- 20060 037 828
- KR-A- 20170 022 465

## Description

### TECHNICAL FIELD

The present application relates to a field of battery technology, and in particular, to a battery cell, a battery, a power consumption device, a method and an apparatus for producing a battery cell.

### BACKGROUND

Batteries are widely used in a field of new energy, such as electric vehicles, new energy vehicles and so on. The new energy vehicles and the electric vehicles have become a new development trend of an automotive industry.

In applications, a cycle life of the battery is an element that cannot be ignored, and performance attenuation of the battery can affect the cycle life of the battery.

CN206076410U discloses a lithium ion button cell that height and diameter ratio are less than 1, its housing of positive and negative poles and the insulation sealing ring is tightly sealed by crimping. The core of the circular flat horizontal surface of the housing of positive and negative poles of coiling axial line perpendicular to battery is the multiaspect regular prism, wherein the diaphragm in the core pole piece group has adopted at least a material. A cylindrical sleeve is embedded between the cylindrical side wall of the inner cavity of the positive housing and the cylindrical side wall of the core. The sleeve is made by elastomeric plastic or metal and accomodates the core to effectively adapt to the volume changes of the cores during charging and discharging.

KR20060037828A discloses to a cylindrical lithium secondary battery, which improves the resistance to external pressure of the winding component by making the cross-sectional shape of the winding component into a polygonal shape, thereby improving the safety. The cylindrical lithium secondary battery of the invention is composed of a first electrode plate, a second electrode plate And a coiling electrode assembly having an isolator between the first electrode plate and the second electrode plate; A tubular winding member with polygonal cross section is inserted at the winding center of the coiling electrode component; A housing and a housing for accommodating the space of the electrode assembly body; The utility model is connected with the upper part of the housing and comprises a cover assembly for sealing.

### SUMMARY

The present application aims to provide a battery cell, a battery, a power consumption device, a method and an apparatus for producing a battery cell to alleviate a problem of performance attenuation of the battery cell affecting a cycle life of the battery cell.

Embodiments of the present application are implemented as follows:
In a first aspect, the embodiments of the present application provides a battery cell, including:
a housing, with a cylindrical accommodating cavity;
an electrode assembly, arranged in the accommodating cavity, and a projection of the electrode assembly along a height direction of the battery cell is a polygon, a remaining space is provided between the electrode assembly (300) and an inner wall of the housing to allow the electrode assembly to expand; and
a binding layer, configured to wrap the electrode assembly, and the binding layer has elasticity to allow the electrode assembly to expand, there is an interval between the binding layer and an inner wall of the housing.

In the technical solution of the embodiments of the present application, the projection of the electrode assembly along the height direction of the battery cell is a polygon, and the accommodating cavity of the housing is cylindrical. Even if the electrode assembly expands after charging and discharging, there is still a remaining space between the electrode assembly and an inner wall of the housing to prevent an outer circumferential surface of the electrode assembly from being pressed by the housing. The remaining space can allow the electrode assembly to expand to avoid a problem of the performance degradation of the battery cell caused by performance deterioration of an electrode sheet, such as drop of active materials, difficulty in infiltration of an electrolytic solution, and fracture of the electrode sheet due to excessive compression of the electrode sheet, thereby alleviating the problem of the performance degradation of the battery cell affecting a cycle life of the battery cell.

In an embodiment of the present application, the projection of the electrode assembly is a pentagon, a hexagon, an octagon, a decagon or a hexadecagon.

Compared with the projection of the electrode assembly as a triangle, the electrode assembly is projected as a pentagon, a hexagon, a octagon, a decagon or a hexadecagon, which can improve energy density of the battery cell on the premise of ensuring that there is an enough remaining space between the electrode assembly and the inner wall of the housing, so as to take into account of improving the cycle life and energy density of the battery cell.

In an embodiment of the present application, a shape of any cross section of the electrode assembly perpendicular to the height direction of the battery cell is the polygon.

Along the height direction of the battery cell, any height position of the electrode assembly has the remaining space, and any height position of the electrode assembly can release stress, so as to further prevent local stress concentration caused by excessive compression of the electrode sheet and alleviate the problem of the performance degradation of the battery affecting the cycle life of the battery.

In an embodiment of the present application, a three-dimensional shape of the electrode assembly is a prism.

Any cross section of the prism in a direction perpendicular to its own height (that is, perpendicular to the height direction of the battery cell) is the same. Compared with the case where a shape of part of the cross section is different, the electrode assembly with the three-dimensional shape of prism is more convenient to be produced and manufactured.

In an embodiment of the present application, the three-dimensional shape of the electrode assembly is a regular prism.

The projection of the electrode assembly in the shape of the regular prism is a regular polygon. Compared with a non-regular polygon with the same diameter of a circumscribed circle, an area of the regular polygon occupies more than that of the circumscribed circle. Therefore, when the projection is regular polygon, the energy density of the battery cell is relatively larger. In addition, when the three-dimensional shape of the electrode assembly is regular prism, force bearing parts of the electrode assembly are at a side edge of the regular prism, that is, at a vertex of the projection of the electrode assembly. The force bearing parts are evenly distributed on outer circumference of the electrode assembly to make the electrode assembly receive more even force, so as to alleviate the local stress concentration caused by the excessive compression of the electrode assembly, thereby further preventing the performance degradation of the battery from affecting the cycle life of the battery cell.

In an embodiment of the present application, two adjacent edges of the projection of the electrode assembly possess a smooth transition to make the vertex of the polygon a fillet.

When the electrode assembly expands, mainly a vertex position of the polygon abuts against the inner wall of the housing. By enabling the smooth transition between the two adjacent edges of the polygon, the vertex forms a fillet structure to increase a force bearing area and reduce the local stress of the vertex position, so as to further prevent excessive stress caused by excessive compression at the vertex, thereby preventing the performance degradation of the battery from affecting the cycle life of the battery cell.

In an embodiment of the present application, a ratio of a diameter of a circumscribed circle of the projection of the electrode assembly to a diameter of the accommodating cavity is 90%- <100%.

A ratio of a diameter of the circumscribed circle of the polygon formed by the projection of the electrode assembly to the diameter of the accommodating cavity is a group margin of the battery cell. The smaller the group margin, the larger an interval, and the smaller the energy density of the battery cell, but at this time, the electrode assembly is relatively easier to be accommodated; on the contrary, the larger the group margin, the smaller the interval, and the larger the energy density of the battery cell, but at this time, the electrode assembly is relatively more difficult to be accommodated. When the group margin is configured to be 90%-100%, in the case that the remaining space is provided for expansion of the electrode assembly, the battery cell has larger energy density, and it is also convenient to accommodate the electrode assembly.

In an embodiment of the present application, the ratio of the diameter of the circumscribed circle of the projection of the electrode assembly to the diameter of the accommodating cavity is 95% <100%.

The above technical solution further increases the energy density on the premise that it is ensured that there is the remaining space for releasing the stress of the electrode assembly.

In an embodiment of the present application, the electrode assembly includes a first electrode sheet and a second electrode sheet with an opposite electrical polarity to the first electrode sheet, and the first electrode sheet and the second electrode sheet are wound to form the electrode assembly; and
a connecting line between any vertex of the projection of the electrode assembly and a center of the circumscribed circle of the projection of the electrode assembly is defined as a first straight line, a projection of an edge of a winding closing end of the first electrode sheet along a height direction of the battery cell is not on any first straight line, and a projection of an edge of the winding closing end of the second electrode sheet along the height direction of the battery cell is not on any first straight line.

By making the edge of the winding closing end of the first electrode sheet and the edge of the winding closing end of the second electrode sheet not on the first straight line, the first electrode sheet or the second electrode sheet do not increase the diameter of the circumscribed circle when closing, so as to improve the energy density without increasing the group margin, and also to make a distance between each vertex and the inner wall of the housing approximately equal, to avoid the excessive local stress caused by the excessive compression of individual vertex, resulting in the performance degradation of the battery, thereby increasing the cycle life of the battery.

In an embodiment of the present application, the electrode assembly includes a first electrode sheet and a second electrode sheet with opposite electrical polarity to the first electrode sheet, and the first electrode sheet and the second electrode sheet are wound to form the electrode assembly; and
a connecting line between any vertex of the projection of the electrode assembly and a center of the circumscribed circle of the projection of the electrode assembly is defined as a first straight line, a projection of an edge of a winding initial end of the first electrode sheet along the height direction of the battery cell is not on any first straight line, and a projection of an edge of the winding initial end of the second electrode sheet along the height direction of the battery cell is not on any first straight line.

When the winding initial end is on the first straight line, an end face of the winding initial end may abut on a surface of the electrode sheet of an adjacent area, which causes the end face of the winding initial end to be easily rubbed, resulting in powder loss of a coating layer (i.e. an active material layer) near the end surface, and the powder loss may affect the cycle life of the battery, which may also lead to a phenomenon of lithium plating. By making the edge of the winding initial end of the first electrode sheet and the edge of the winding initial end of the second electrode sheet not on the first straight line, it can effectively alleviate the powder loss of the coating layer caused by mutual friction between the end face of the winding initial end of the electrode sheet and the surface of the electrode sheet of the adjacent area, thereby avoiding affecting the cycle life of the battery.

In an embodiment of the present application, the electrode assembly includes a first electrode sheet and a second electrode sheet with opposite electrical polarity to the first electrode sheet, and the first electrode sheet and the second electrode sheet are wound to form the electrode assembly; and
a connecting line between any vertex of the a projection of the electrode assembly and a center of a circumscribed circle of the projection of the electrode assembly is defined as a first straight line, the projection of the electrode assembly is divided into a plurality of areas by a plurality of first straight lines, and a difference between a number of layers of the electrode sheet in any two areas is less than or equal to 1.

The difference between the number of layers of the electrode sheet in any two areas is less than or equal to 1, and a difference between the number of winding layers in each area is small or the number of winding layers is the same, thereby being capable of improving an internal space utilization of the accommodating cavity and taking into account effects of increasing the cycle life of the battery and improving the energy density.

In an embodiment of the present application, the projection of an edge of the winding initial end of the first electrode sheet along the height direction of the battery cell and the projection of an edge of a winding closing end of the first electrode sheet along the height direction of the battery cell are located in two adjacent areas, and the projection of an edge of a winding initial end of the second electrode sheet along the height direction of the battery cell and the projection of an edge of a winding closing end of the second electrode sheet along the height direction of the battery cell are located in two adjacent areas.

When the winding initial ends and the winding closing ends of the first electrode sheet and the second electrode sheet are in two adjacent areas, the number of winding turns of the first electrode sheet and the second electrode sheet can be both an integer, and the number of layers of the electrode sheet in any two areas is equal, thereby improving an internal space utilization of the accommodating cavity. It can also avoid a relatively small interval between an outer circumferential surface of the area and the inner wall of the housing due to excessive winding layers in a certain area, so as to avoid an excessive local stress caused by the excessive compression of the individual vertex during expansion, thereby avoiding affecting the cycle life of the battery.

The binding layer not only wraps the electrode assembly, so that the electrode assembly can maintain its projected shape, but also prevents the wound electrode sheet from being too loose to increase an internal resistance and affect the performance of the battery.

In an embodiment of the present application, the binding layer is a sleeve, and the binding layer is sleeved on the outside of the electrode assembly.

The sleeved binding layer has good integrity, good binding effect, and is easy to assemble.

There is an interval between the binding layer and the inner wall of the housing, so that more remaining space can be provided for the expansion of the electrode assembly.

In an embodiment of the present application, a three-dimensional shape formed by the binding layer sleeved on the outside of the electrode assembly is the same as the three-dimensional shape of the electrode assembly.

The three-dimensional shape of the binding layer is the same as the three-dimensional shape of the electrode assembly, that is, an overall projection formed by the electrode assembly and the binding layer along the height direction of the battery cell is the polygon to ensure that there is the remaining space between the binding layer and the inner wall of the housing, so that the electrode assembly can further release the stress.

In a second aspect, the embodiments of the present application provide a battery, including the aforesaid battery cell.

For the battery provided by the embodiment, its battery cell is not easy to present a problem of the performance deterioration of the electrode sheet due to expansion of the internal electrode assembly, and the battery has better durability and longer service life.

In a third aspect, the embodiments of the present application provide a power consumption device, including the aforesaid battery.

For the power consumption device provided by the embodiment, the battery used has better durability and longer service life, so that the power consumption device operates stably

In a fourth aspect, the embodiments of the present application provide a method for producing a battery cell, including:
providing a housing, where the housing has a cylindrical accommodating cavity;
providing an electrode assembly, where a projection of the electrode assembly along a height direction of the battery cell is a polygon, a remaining space is provided between the electrode assembly and an inner wall of the housing to allow the electrode assembly to expand;
providing a binding layer, configured to wrap the electrode assembly, and the binding layer has elasticity to allow the electrode assembly to expand, there is an interval between the binding layer and an inner wall of the housing; and
arranging the electrode assembly in the accommodating cavity.

In a fifth aspect, the embodiments of the present application provide an apparatus for producing a battery cell, including:
a first providing apparatus, configured to provide a housing, and the housing has a cylindrical accommodating cavity;
a second providing apparatus, configured to provide an electrode assembly, and a projection of the electrode assembly along a height direction of the battery cell is a polygon, a remaining space is provided between the electrode assembly and an inner wall of the housing to allow the electrode assembly to expand;
the second providing apparatus further configured to provide a binding layer configured to wrap the electrode assembly, and the binding layer has elasticity to allow the electrode assembly to expand, there is an interval between the binding layer and an inner wall of the housing; and
an assembling apparatus, configured to arrange the electrode assembly in the accommodating cavity.

### BRIEF DESCRIPTION OF DRAWINGS

To describe technical solutions in embodiments of the present application more clearly, the following briefly introduces accompanying drawings required for describing the embodiments of the present application. Apparently, the accompanying drawings in the following description show merely some embodiments of the present application, and a person of ordinary skill in the art may still derive other drawings from these accompanying drawings without creative efforts.
FIG. 1 is a schematic diagram of a vehicle provided by an embodiment of the present application;
FIG. 2 is a schematic diagram of a battery provided by an embodiment of the present application;
FIG. 3 is an exploded view of a battery module provided by an embodiment of the present application;
FIG. 4 is a schematic diagram of a battery cell provided by an embodiment of the present application;
FIG. 5 is a schematic diagram of assembly of a battery cell provided by an embodiment of the present application;
FIG. 6 is a schematic diagram of a projection of an electrode assembly as a regular pentagon provided by an embodiment of the present application;
FIG. 7 is a schematic diagram of an electrode assembly during expansion provided by an embodiment of the present application;
FIG. 8 is a schematic diagram of a three-dimensional shape of an electrode assembly with any cross section being in the same shape but different sizes provided by an embodiment of the present application;
FIG. 9 is a schematic diagram of a three-dimensional shape of an electrode assembly with a three-dimensional shape of a prism provided by an embodiment of the present application;
FIG. 10 is a schematic diagram of a projection of an electrode assembly as a non-regular hexagon provided by an embodiment of the present application;
FIG. 11 is a schematic diagram of a projection of an electrode assembly as a regular hexagon provided by an embodiment of the present application;
FIG. 12 is a schematic diagram of a projection of an electrode assembly as a regular octagon provided by an embodiment of the present application;
FIG. 13 is a schematic diagram of a projection of an electrode assembly as a regular decagon provided by an embodiment of the present application;
FIG. 14 is a comparison diagram of an area division when a projection of an electrode assembly is a regular hexagon of the present application;
FIG. 15 is a schematic diagram of a winding of a first electrode sheet and a second electrode sheet provided by an embodiment of the present application;
FIG. 16 is a schematic diagram of another winding of a first electrode sheet and a second electrode sheet provided by an embodiment of the present application;
FIG. 17 is a schematic diagram of yet another winding of a first electrode sheet and a second electrode sheet provided by an embodiment of the present application;
FIG. 18 is a schematic diagram of still another winding of a first electrode sheet and a second electrode sheet provided by an embodiment of the present application;
FIG. 19 is a schematic diagram of a winding initial end edge of an electrode sheet and a winding closing end edge of the electrode sheet not on a first straight line provided by an embodiment of the present application;
FIG. 20 is a comparison diagram of a smooth transition and a non-smooth transition between two adjacent edges of a projection of an electrode assembly provided by an embodiment of the present application;
FIG. 21 is an electrode assembly formed by co-winding a first electrode sheet, a second electrode sheet, a first membrane and a second membrane provided by an embodiment of the present application;
FIG. 22 is a schematic diagram of an overall projection when a binding layer is sleeved on an outside of an electrode assembly provided by an embodiment of the present application;
FIG. 23 is a schematic diagram of another overall projection when a binding layer is sleeved on the outside of an electrode assembly provided by an embodiment of the present application;
FIG. 24 is an exploded view of a battery cell provided by an embodiment of the present application;
FIG. 25 is a schematic flowchart of a method for producing a battery cell provided by an embodiment of the present application;
FIG. 26 is a schematic block diagram of an apparatus for producing a battery cell provided by an embodiment of the present application.

In the accompanying drawings, the drawings are not drawn to actual scale.

Reference signs are explained as follows: 1-vehicle; 2-motor; 3-controller; 4-battery; 41-battery module; 42-box body; 43-first part; 44-second part; 45-battery cell; 100-housing; 110-accommodating cavity; 200-end cover assembly; 210-electrode terminal; 220-injection hole; 300-electrode assembly; 310-first electrode sheet; 311-first electrode sheet's winding initial end; 312-first electrode sheet's winding closing end; 320-second electrode sheet; 321-second electrode sheet's winding initial end; 322-second electrode sheet's winding closing end; 330-first membrane; 340-second membrane; 400-binding layer; 500-producing apparatus; 510-first providing apparatus; 520-second providing apparatus; 530-assembling apparatus; H-height direction of battery cell; Ci-circumscribed circle.

### DESCRIPTION OF EMBODIMENTS

To make the objectives, technical solutions and advantages of the embodiments of the present application clearer, the following clearly describes the technical solutions in the embodiments of the present application with reference to the drawings in the embodiments of the present application. Apparently, the described embodiments are part but not all of the embodiments of the present application. All the other embodiments obtained by those of ordinary skill in the art based on the embodiments of the present application without any inventive effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "including" and "having" and any variations thereof in the specification and the claims of the present application as well as the foregoing description of the drawings are intended to cover non-exclusive inclusions. The terms "first", "second" and the like in the specification and the claims of the present application as well as the foregoing description of the drawings are used to distinguish different objects, rather than to describe a specific order or primary-secondary relationship.

The phrase "embodiments" referred to in the present application means that the descriptions of specific features, structures, and characteristics in combination with the embodiments are included in at least one embodiment of the present application. The phrase at various locations in the specification does not necessarily refer to the same embodiment, or an independent or alternative embodiment mutually exclusive with another embodiment. Those skilled in the art understand, in explicit and implicit manners, that an embodiment described in the present application may be combined with other embodiments.

In the description of the present application, it should be noted that unless otherwise explicitly specified and defined, the terms "mounting", "connecting", "connection" and "attaching" should be understood in a broad sense, for example, they may be a fixed connection, or a detachable connection, or an integrated connection; may be a direct connection and may also be an indirect connection via an intermediate medium, or may be communication between the inside of two elements. Those of ordinary skill in the art may comprehend the specific meanings of the foregoing terms in the present application according to specific circumstances.

The term "and/or" in the present application describes only an association relationship for describing associated objects and represents that three kinds of relationship may exist. For example, A and/or B may represent the following three cases: only A exists, both A and B exist, and only B exists. In addition, the character "/" in the present application generally indicates that the associated objects before and after the character are in an "or" relation.

In the embodiments of the present application, same components are denoted by same reference numerals, and detailed description of the same components is omitted in different embodiments for brevity. It should be understood that dimensions such as thicknesses, lengths and widths of various components in embodiments of the present application shown in the drawings, as well as dimensions of the overall thickness, length and width of an integrated apparatus are merely illustrative, and should not constitute any limitation to the present application.

In the present application, "a plurality of' means two or more (including two), similarly, "a plurality of groups" means two or more groups (including two groups), and "a plurality of sheets" means two or more sheets (including two sheets).

In the present application, a battery cell may include a lithium-ion secondary battery, a lithium-ion primary battery, a lithium-sulfur battery, a sodium-lithium-ion battery, a sodium-ion battery or a magnesium-ion battery, etc., or may be a solid-state battery or a semi-solid battery etc., which are not limited by the embodiments of the present application.

The battery mentioned in the embodiments of the present application refers to a single physical module that includes one or more battery cells to provide a higher voltage and capacity. For example, the battery mentioned in the present application may include a battery module, a battery pack or the like. The battery generally includes a box body for enclosing one or more battery cells. The box body can prevent a liquid or other foreign matters from affecting the charging or discharging of the battery cell.

The battery cell includes an electrode assembly and an electrolyte. When the electrolyte is a solid electrolyte, the electrode assembly includes a positive electrode sheet and a negative electrode sheet; and when the electrolyte is a liquid electrolyte (that is, an electrolytic solution), the electrode assembly includes the positive electrode sheet, the negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, a current collector not coated with the positive electrode active material layer protrudes from a current collector coated with the positive electrode active material layer, and the current collector not coated with the positive electrode active material layer is used as a positive electrode tab. As an example, in a lithium-ion battery, a material of the positive electrode current collector may be aluminum, and the positive electrode active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, a current collector not coated with the negative electrode active material layer protrudes from a current collector coated with the negative electrode active material layer, and the current collector not coated with the negative electrode active material layer is used as a negative electrode tab. A material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. A material of the separator may be PP, PE, or the like. In addition, the electrode assembly may be a winding structure or a laminated structure, and the embodiments of the present application are not limited thereto. With the development of battery technology, it is necessary to consider many design factors at the same time, such as energy density, cycle life, discharge capacity, charge-discharge rate and other performance parameters. In addition, safety of batteries should also be considered.

With regard to the battery cell, main safety hazards come from charging and discharging processes, and a suitable environmental temperature design is also required. In order to effectively avoid unnecessary losses, at least triple protection measures are generally taken for the battery cell. Specifically, the protection measures include at least a switching element, a properly selected separator material and a pressure relief mechanism. The switching element refers to an element that can stop the charging or discharging of the battery when the temperature or resistance in the battery cell reaches a certain threshold. The separator is used to isolate the positive electrode sheet from the negative electrode sheet and can automatically dissolve micron-sized (or even nanoscale) micro-pores attached to the separator when the temperature rises to a certain value, thereby preventing metal ions from passing through the separator and terminating an internal reaction of the battery cell. The pressure relief mechanism refers to an element or component that is actuated to relieve an internal pressure or temperature when the internal pressure or temperature of the battery cell reaches a predetermined threshold. The threshold design varies according to different design requirements. The threshold may depend on the materials of one or more of the positive electrode sheet, the negative electrode sheet, the electrolytic solution and the separator in the battery cell.

During use of the battery cell, sometimes a performance of the battery cell may deteriorate or sharply drop. The inventor researched and found that a main reason for performance being worse of the battery cell is that an infiltrating effect of the electrolytic solution on the electrode sheet is worse after the battery cell is used for a period of time. And the worse the infiltrating effect of the electrolytic solution on the electrode sheet, the greater the performance attenuation of the battery, which seriously affects a cycle life of the battery. However, the inventor tried to improve an electrolytic solution infiltration agent and an electrode sheet winding process, etc., but the problem has not been solved yet. The inventor further researched and found that a main reason for the worse infiltrating effect of the electrode sheet is that the electrode assembly is locked when abutting against the inner wall of the housing of the battery cell. The lock mentioned in the embodiments refers that an outer circumferential surface of the electrode assembly completely abuts against the inner wall of the housing, causing that the electrode assembly cannot release a stress.

The electrode assembly may slowly expand during use, when the outer circumferential surface of the electrode assembly completely abuts against the inner wall of the housing, the electrode assembly can be pressed if it expands further. A porosity is decreased when the electrode sheet is over pressed, thus an amount of the electrolytic solution absorbed by the electrode sheet is reduced, and the infiltrating effect of the electrolytic solution on the electrode sheet is worse. Moreover, once the electrode sheet is over pressed, a permanent damage may occur, even if a compressive stress disappears, the extruded electrolytic solution cannot be completely absorbed again, resulting in the case that the performance of the battery cell deteriorates or sharply drops, thereby reducing the cycle life of the battery cell.

In addition, when the electrode sheet is over pressed, material particles of the electrode sheet may be ruptured. At this time, a surface of the material particles may be reformed into a film, which may be accompanied by side reactions, resulting in accelerated attenuation. Therefore, regardless of the battery cell using the electrolytic solution or the solid electrolyte, when the electrode sheet is over pressed, a problem of the performance attenuation is easily to occur, which affects the cycle life of the battery cell.

In view of this, in order to solve the problem of reducing the cycle life of the battery, the embodiments of the present application provide a technical solution, that is, a cylindrical accommodating cavity is arranged in the housing of the battery cell, the accommodating cavity is used to accommodate the electrode assembly, and the electrode assembly is configured that a projection along a height direction of the battery cell is a polygon. When the electrode assembly expands due to the charging and discharging during the use, a vertex position of the polygon abuts against the inner wall of the housing, and there is still a remaining space between an edge of the polygon and the inner wall of the housing, so as to prevent the electrode assembly from being locked when its outer circumferential surface completely abuts against the inner wall of the housing. The remaining space allows the electrode assembly to release the stress to prevent the electrode sheet from being over pressed, avoid micro damages caused by the fracture of the material particles or the reduced porosity, and avoid macro damages caused by the fracture of the electrode sheet, so as to solve the problem of the performance attenuation of the battery cell caused by the performance deterioration of the electrode sheet, thereby solving the problem of reducing the cycle life of the battery cell due to the performance attenuation of the battery cell.

The technical solution described in the embodiments of the present application are all applicable to various power consumption devices using batteries, such as mobile phones, portable apparatuses, notebook computers, electro-mobiles, electric toys, electric tools, electric vehicles, ships, spacecrafts and so on. For example, the spacecrafts include airplanes, rockets, space shuttles, spaceships and so on.

It should be understood that the technical solution described in the embodiments of the present application are not only applicable to the power consumption described above, but also applicable to all devices using the batteries. However, for ease of description, the following embodiments are all described by an example of an electric vehicle.

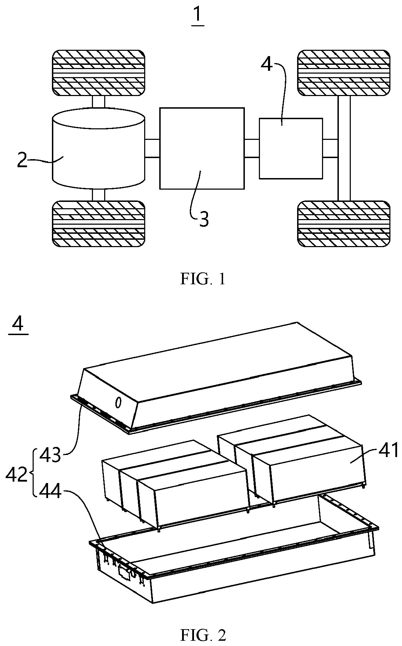

For example, as shown in FIG. 1, FIG. 1 is a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 2, a controller 3 and a battery 4 may be arranged inside the vehicle 1, and the controller 3 is used to control the battery 4 to supply power to the motor 2. For example, the battery 4 may be disposed at the bottom, head or tail of the vehicle 1. The battery 4 may be used for power supply of the vehicle 1. For example, the battery 4 may serve as an operation power source of the vehicle 1 for a circuit system of the vehicle 1, for example, for a working power demand of the vehicle 1 during startup, navigation and running. In another embodiment of the present application, the battery 4 may serve not only as an operation power source of the vehicle 1, but also as a driving power source of the vehicle 1, replacing or partially replacing fuel or natural gas to provide driving power for the vehicle 1.

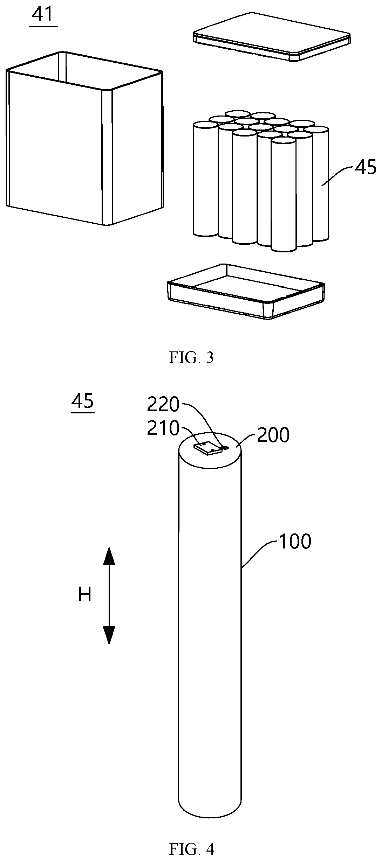

In order to meet different power demands, the battery 4 may include a plurality of battery cells, where the plurality of battery cells may be in series connection, parallel connection or series-parallel connection. The series-parallel connection refers to a combination of series connection and parallel connection. The battery 4 may also be called a battery pack. Optionally, please combine FIG. 2 and FIG. 3, a plurality of battery cells 45 may be first connected in series, in parallel or in series-parallel to form a battery module 41, and then a plurality of battery modules 41 are connected in series, in parallel or in series-parallel to form the battery 4. That is, the plurality of battery cells 45 may directly form the battery 4, or may first form the battery module 41, and then the battery modules 41 form the battery 4.

The battery 4 may include the plurality of battery cells 45; the battery 4 may further include a box body 42 (or called a covering). The inner portion of the box body 42 is a hollow structure, and the plurality of battery cells 45 are accommodated in the box body 42. The box body 42 may include two parts, which are referred to herein as a first part 43 and a second part 44, respectively, and the first part 43 and the second part 44 are buckled together. The shapes of the first part 43 and the second part 44 may be determined according to the shape of the combined plurality of battery cells 45, and the first part 43 and the second part 44 may each have an opening. For example, the first part 43 and the second part 44 each may be a hollow cuboid and each have only one surface with an opening, and the opening of the first part 43 is arranged opposite to the opening of the second part 44, the first part 43 and the second part 44 buckle with each other to form the box body 42 which possesses a closed chamber. One of the first part 43 and the second part 44 can be a cuboid with an opening, and the other is a cover structure to enclose the opening of the cuboid. The plurality of battery cells 45 are combined in parallel connection or series connection or series-parallel connection and are then placed in the box body 42 formed by buckling the first part 43 to the second part 44.

Optionally, the battery 4 may also include other structures. For example, the battery 4 may also include a busbar. The busbar is used to implement an electrical connection between the plurality of battery cells 45, such as parallel connection, series connection or series-parallel connection. Specifically, the busbar can implement the electrical connection between the battery cells 45 by connecting electrode terminals of the battery cell 45. Furthermore, the busbar can be fixed to the electrode terminal of the battery cell 45 by means of welding. Electrical energy of the plurality of battery cells 45 can be further led out through an electrically conductive mechanism passing through the box body. Optionally, the electrically conductive mechanism may also belong to the busbar.

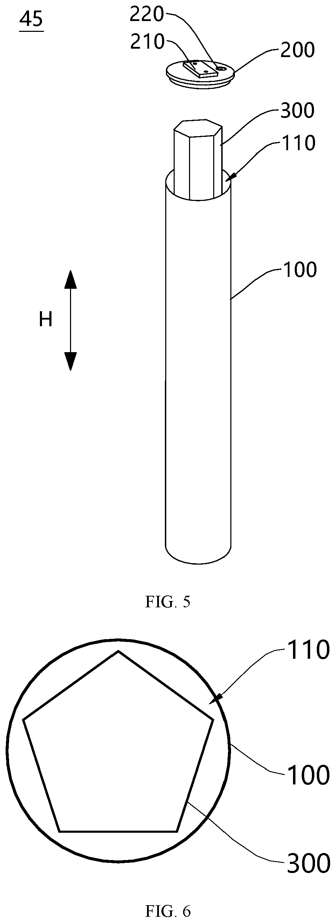

Any one of battery cells 45 is described in detail in the following. FIG. 4 and FIG. 5 show a battery cell 45 according to an embodiment of the present application, and the battery cell 45 includes a housing 100, an end cover assembly 200 and one or more electrode assembly 300.

The housing 100 may be a cuboid, a cube or a cylinder, the housing is hollow and has a cylindrical accommodating cavity 110, and one surface of the housing 100 has an opening such that one or more electrode assemblies 300 can be placed in the accommodating cavity 110. For example, an end face of the housing 100 is a plane with an opening, that is, the end face is configured to have no wall body so that the accommodating cavity 110 is in communication with the outside of the housing 100. The end cover assembly 200 covers the opening and is connected to the housing 100 to enclose the accommodating cavity 110, and fills the accommodating cavity 110 with the electrolytic solution through an injection hole 220 on the end cover assembly 200.

The battery cell 45 further includes one or more electrode terminals 210, and the electrode terminal 210 is arranged on the end cover assembly 200. The electrode terminal 210 is connected with a connecting member, or may also be called an adapter (not shown in the figure), which is located between the end cover assembly 200 and the electrode assembly 300 and is used to electrically connect the electrode assembly 300 and the electrode terminal 210.

Each electrode assembly 300 has a first electrode sheet and a second electrode sheet, and the first electrode sheet and the second electrode sheet have opposite polarities. For example, when the first electrode sheet is a positive electrode sheet, the second electrode sheet is a negative electrode sheet. An electrode tab of the first electrode sheet of one or more electrode assemblies 300 is connected to one electrode terminal 210 through one adapter, for example, a positive electrode terminal; and an electrode tab of the second electrode sheet of one or more electrode assemblies 300 is connected to another electrode terminal 210 through another adapter, for example, a negative electrode terminal. That is, the positive electrode terminal is connected to the tab of the positive electrode sheet through one adapter, and the negative electrode terminal is connected to the tab of the negative electrode sheet through another adapter.

In the battery cell 45, one or more electrode assemblies 300 can be arranged according to actual use requirements. As shown in FIG. 5, the electrode assembly 300 is arranged in the accommodating cavity 110 of the battery cell 45.

The accommodating cavity 110 is configured to be cylindrical. In FIG. 6, a regular pentagon is taken as an example to show a schematic diagram of a projection of the battery cell 45 along a height direction of the battery cell, where it shows a projection of the electrode assembly 300 and a projection of the accommodating cavity 110. The projection of the accommodating cavity 110 along the height direction of the battery cell are a circle, and the projection of the electrode assembly 300 along the height direction of the battery cell is a polygon.

All projections in the embodiments are "projections along the height direction of the battery cell", which are referred to as a projection hereinafter. In addition, the projection of the electrode assembly in the drawings of the present application only shows an outline of the projection with lines to characterize a shape of the projection, which does not mean that the electrode assembly must be a hollow structure.

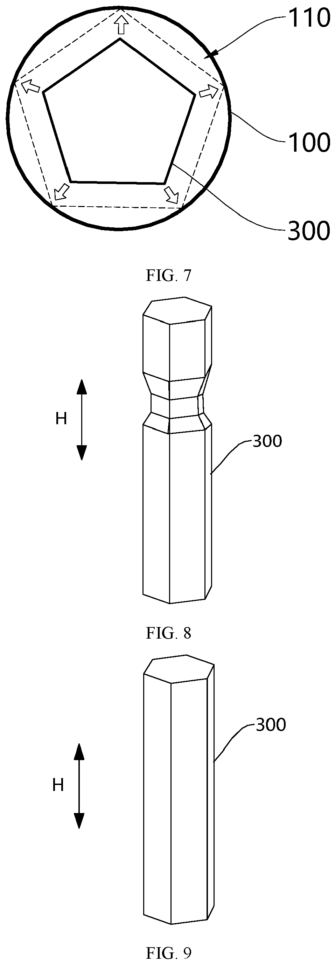

After the electrode assembly 300 is enclosed in the accommodating cavity 110, the electrode assembly 300 may expand when charging and discharging. FIG. 7 takes a projection of a regular pentagon as an example to show an expansion process of an electrode assembly 300. In FIG. 7, a dotted line is a projection of the expanded electrode assembly 300. As the electrode assembly 300 expands, a vertex of the regular pentagon gradually approaches an inner wall of the housing 100. After the electrode assembly 300 expands to the vertex tightly abuts against the inner wall of the housing 100, there is still an interval between an edge of the regular pentagon and the inner wall of the housing 100, which still provides the electrode assembly 300 a space to release the stress. When the electrode assembly continues to expand, the edges of the regular pentagon expands, bulges and deforms towards the inner wall of the housing 100, so that an expansion force of the electrode sheet of the electrode assembly is fully released, which prevents outer circumference of the electrode assembly 300 from being deadlocked by the inner wall of the housing 100, and even if the electrode assembly 300 continues to expand, the electrode sheet may not be over pressed.

In some embodiments, a shape of any cross section of the electrode assembly 300 perpendicular to the height direction of the battery cell is the polygon. That is, in any height position of the electrode assembly 300, there is a remaining space between the outer circumferential surface of the electrode assembly 300 and the inner wall of the housing 100, so that the stress at any height position of the electrode assembly 300 can be released, thereby further preventing local stress concentration caused by excessive compression of the electrode sheet, and alleviating a problem of the decreased performance of the battery affecting the cycle life of the battery.

In some embodiments, any part of the cross section can be different. For example, FIG. 8 shows an electrode assembly 300, and a shape of any cross section of the battery cell 45 along a height direction H of the battery cell is a hexagon, but part of the cross section has relatively larger area and part of the cross section has relatively smaller area. In other embodiments, any cross section along the height direction H of the battery cell may also have different shapes. For example, the cross section of the electrode assembly at some heights is a quadrilateral, and the cross section at other heights is a pentagon or the like.

In some embodiments, in order to facilitate production and manufacturing, as shown in FIG. 9, a shape of any cross section of the electrode assembly 300 perpendicular to the height direction H of the battery cell is a polygon with same shape and size, that is, a three-dimensional shape of the electrode assembly 300 is a prism. Along the height direction H of the battery cell, a projection of the prism is the same as its cross section at any height position, which is a polygon with the same shape and size.

The polygon in the embodiment refers to a plane figure formed by three or more line segments connected sequentially from end to end, and the number of edges of the polygon in the present application is not limited, where the polygon may also be a quadrilateral, a hexagon, an octagon, a decagon, a hexadecagon or the like.

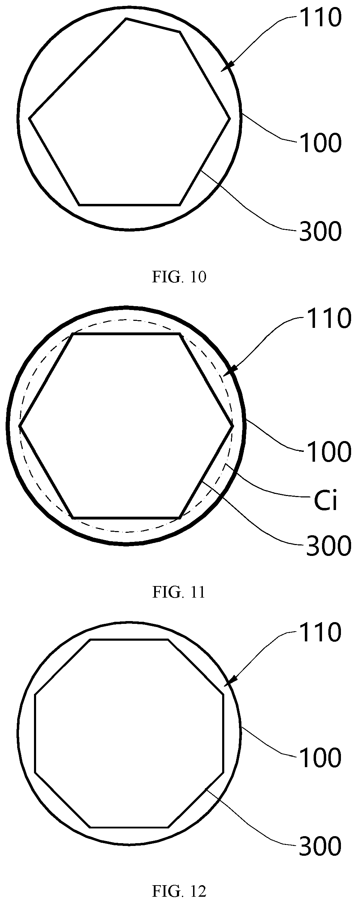

The shape of the polygon can be a regular polygon or a non-regular polygon. For example, FIG. 10 shows a battery cell 45 of which a projection of its electrode assembly 300 is a non-regular hexagon.

In some embodiments, a projection of the electrode assembly 300 is a regular polygon. For example, FIG. 11 shows a battery cell 45 of which a projection of its electrode assembly 300 is a regular hexagon.

When assembling, a centroid of the regular polygon (that is, a center of a circumscribed circle Ci) is arranged on an axis of a cylindrical accommodating cavity 110. When the regular polygon expands to the inner wall of the housing 100 which each vertex abuts against, the inner wall of the housing 100 has a reaction force on the polygon, and force bearing parts of the reaction force is at a vertex of the polygon. Since each vertex of the regular polygon is evenly spaced apart, the force bearing parts of the electrode assembly 300 projected as a regular polygon are evenly distributed on the outer circumference, so that the electrode assembly is relatively evenly stressed, which can prevent the excessive compression of the electrode sheet caused by the uneven force and local stress concentration of the electrode assembly 300, and further prevent the performance attenuation of the battery, thereby increasing the cycle life of the battery.

Since the electrode assembly 300 is not prone to the local stress concentration, and there is still a remaining space between the electrode assembly 300 and the inner wall of the housing 100 to release the internal stress, which can not only prevent micro damages of the reduced porosity and rupture of the material particles due to the excessive compression of the electrode sheet of the electrode assembly 300, but also make the electrode sheet less prone to macro damages of breakage and fracture due to the excessive internal stress.

Moreover, in the case that the diameter of the circumscribed circle Ci is the same, an area of a regular polygon is greater than an area of a non-regular polygon with the same number of edges, which increases the energy density of the battery cell.

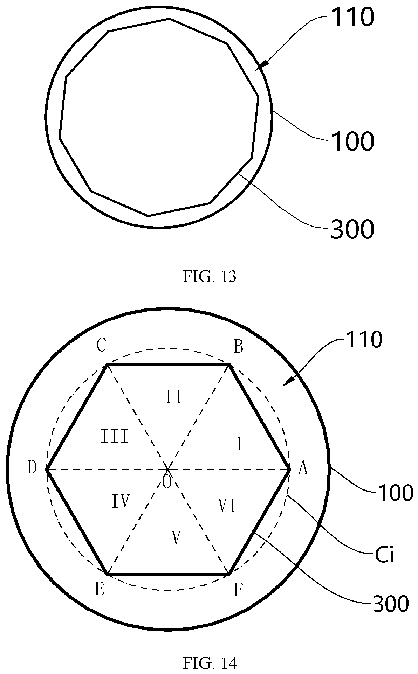

In some embodiments, in addition that the projection of the electrode assembly 300 can be configured as a regular pentagon or a regular hexagon as described above, it can also be configured as a regular polygon with other numbers of the edges, for example, a regular decagon shown in FIG. 12, and a regular decagon or a regular hexadecagon shown in FIG. 13.

When the diameter of the circumscribed circle Ci is the same, the more the number of the edges of the regular polygon, the larger the area of the regular polygon. In the case of ensuring that there is enough remaining space between the electrode assembly and the inner wall of the housing 100, the energy density can be effectively improved by increasing the number of the edges of the regular polygon.

In the art, a group margin is often used to characterize the energy density of the battery cell, for example, in the prior art, the group margin of a cylindrical electrode assembly is a ratio of a diameter of the cylindrical electrode assembly to a diameter of the cylindrical accommodating cavity. In the embodiment, a ratio of a diameter of the circumscribed circle Ci of the polygon formed by the projection of the electrode assembly 300 to a diameter of the accommodating cavity 110 is defined as the group margin, and the larger the group margin, the larger the energy density.

In some embodiments, the group margin of the battery cell 45 is configured to be 90% <100%, that is, a ratio of a diameter of the circumscribed circle Ci of the projection of the electrode assembly 300 to the diameter of the accommodating cavity 110 is 90%-<100% to maximize use of an accommodating volume of the accommodating cavity 110. At the same time, the remaining space is provided for expansion of the electrode sheet, which can prevent the electrode assembly 300 from being deadlocked by the inner wall of the housing 100, resulting in an excessive internal stress of the electrode assembly 300, prevent the electrode sheet from being over compressed, resulting in a problem of the performance deterioration of the electrode sheet, such as drop of active materials, difficulty in infiltration of the electrolytic solution, and the fracture of the electrode sheet, thereby preventing a performance degradation of the battery cell which reduces the cycle life.

In other embodiments, the group margin of the battery cells 45 is configured to be 95%<100%, that is, the ratio of the diameter of the circumscribed circle Ci of the projection of the electrode assembly 300 to the diameter of the accommodating cavity 110 is 95%. <100% to improve the energy density on the premise of ensuring a remaining space for releasing the stress of the electrode assembly 300.

It should be noted that a value of the group margin mentioned here refers to a state when the battery cell 45 is charged and discharged at a constant voltage to be activated. At this time, the electrode assembly 300 may have expanded, even if the vertex of the electrode assembly 300 has abutted against the inner wall of the housing 100 and the group margin reaches 100%, since there is still a remaining space between the electrode assembly 300 and the inner wall of the housing 100, the electrode assembly 300 is not easy to be deadlocked, the electrode sheet may not be over compressed and damaged, the electrolytic solution is not easy to be extruded, the battery cell 45 can maintain a lower internal resistance, and a performance degradation or sudden decrease may not easy to happen, thereby ensuring a longer cycle life.

As described above, the electrode assembly 300 in the embodiment includes a first electrode sheet 310 and a second electrode sheet 320. The electrode assembly 300 may be formed by stacking materials including the first electrode sheet 310 and the second electrode sheet 320, or may be formed by winding materials including the first electrode sheet 310 and the second electrode sheet 320.

As an example for description, the electrode assembly 300 is formed by winding the first electrode sheet 310 and the second electrode sheet 320. Firstly, a projection shape of the electrode assembly 300 is set, for example, the electrode assembly 300 is set to be a prism, and its projection is a regular hexagon.

As shown in FIG. 14, in order to facilitate a description of a winding structure of the electrode assembly 300, FIG. 14 provides an area division diagram when a projection is a regular hexagon. The regular hexagon has six vertexes A, B, C, D, E, F, a connecting line between a vertex of the projection of the electrode assembly 300 and a center O of the circumscribed circle of the projection of the electrode assembly 300 is defined as a first straight line, that is, the regular hexagon includes six first straight lines: AO, BO, CO, DO, EO, FO, and the six first straight lines divide the regular hexagon into six areas I, II, III, IV, V, VI, where an area I is a triangle AOB, an area II is a triangle BOC, an area III is a triangle COD, an area IV is a triangle DOE, an area V is a triangle EOF, and an area VI is a triangle FOA. All the first straight lines and areas described below are based on this.

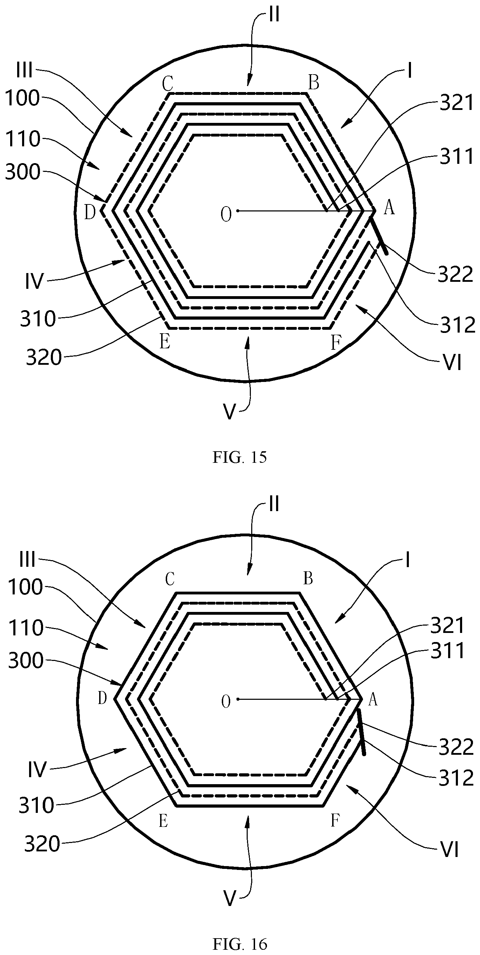

FIG. 15 shows a projection of the first electrode 310 and the second electrode sheet 320. In this embodiment, the first electrode sheet 310 is a positive electrode sheet, and the second electrode sheet 320 is a negative electrode sheet.

The first electrode sheet 310 starts from one of the six areas and winds in a clockwise or counterclockwise direction, and the second electrode sheet 320 starts from one of the six areas and winds in the clockwise or counterclockwise direction. Generally speaking, the first electrode sheet 310 and the second electrode sheet 320 are first stacked then wound, and the first electrode sheet 310 and the second electrode sheet 320 have the same winding direction.

In the following description, inside means close to the center O of the circumscribed circle, and outside means away from the center O of the circumscribed circle. For example, in FIG. 15, both the first electrode sheet 310 and the second electrode sheet 320 start from the area I and wind from the inside to the outside in a counterclockwise direction.

In FIG. 15, a first electrode sheet's winding initial end 311 is in the area I, a first electrode sheet's winding closing end 312 is in the area VI adjacent to the area I; a second electrode sheet's winding initial end 321 is in the area I, and a second electrode sheet's winding closing end 322 is in the area VI adjacent to area I. At this time, the number of winding turns of the first electrode sheet 310 is an integer, and the number of winding turns of the second electrode sheet 320 is also an integer. In other words, the times of the first electrode sheet 310 passing through the area I, area II, area III, area IV, area V, and area VI are the same, and the number of layers the first electrode sheet 310 being stacked in each area is the same, which is two; similarly, the times of the second electrode sheet 320 passing through the area I, area II, area III, area IV, area V, and area VI are the same, and the number of layers the second electrode sheet 320 being stacked in each area is the same, which is three. At this time, all the number of layers of the electrode sheet in each area is equal to five layers, and all the difference between the number of layers of the electrode sheet in any two areas is 0.

In FIG. 15, the first electrode sheet's winding initial end 311 and the first electrode sheet's winding closing end 312 are in adjacent areas, and the second electrode sheet's winding initial end 321 and the second electrode sheet's winding closing end 322 are in adjacent areas. However, the first electrode sheet 310 and the second electrode sheet 320 have different winding turns. The number of winding turns of the second electrode sheet 320 as the negative electrode sheet is larger than the number of winding turns of the first electrode sheet 310 as the positive electrode sheet, so that an innermost layer and an outermost layer of the electrode assembly 300 are both the second electrode sheet 320 to ensure that an inner side and an outer side of the first electrode sheet 310 are always corresponded with the second electrode sheet 320, and a lithium ion can be intercalated into the second electrode sheet 320 after being de-intercalated from either of two surfaces of the first electrode sheet 310, thereby effectively preventing a lithium plating due to an insufficient remaining amount of the second electrode sheet 320.

In other embodiments, the first electrode sheet 310 and the second electrode sheet 320 may also have the same number of winding turns. As shown in FIG. 16, FIG. 16 shows a projection of the first electrode sheet 310 and the second electrode sheet 320. The first electrode sheet's winding initial end 311 is in the area I, the first electrode sheet's winding closing end 312 is in the area VI, the second electrode sheet's winding initial end 321 is in the area I, and the second electrode sheet's winding closing end 322 is in the area VI, that is, the first electrode sheet's winding initial end 311 and the first electrode sheet's winding closing end 312 are in adjacent areas, the second electrode sheet's winding initial end 321 and the second electrode sheet's winding closing end 322 are in adjacent areas, and it is set that the first electrode sheet 310 and the second electrode sheet 320 have the same number of winding turns. Both the number of layers the first electrode sheet 310 and the second electrode sheet 320 stacked in each area are two, the number of layers of the electrode sheets in each area is four. The innermost layer of the electrode assembly 300 is the second electrode sheet 320, and the outermost layer is the first electrode sheet 310. In order to prevent the lithium plating, an outer side of the first electrode sheet 310 which is at least not covered with the second electrode sheet 320 is provided without a coating layer, that is, without active materials, and an edge of a second electrode sheet's winding closing end 322 exceeds an end of a first electrode sheet's winding closing end 312 in case of an insufficient remaining amount of the second electrode sheet 320.

Each electrode sheet has two surfaces. When winding, one of the two surfaces always faces a direction of the center O of the circumscribed circle and the other faces a direction of the inner wall of the housing 100. A side facing the center O of the circumscribed circle is taken as the inner side, and a side facing a direction of the inner wall of the housing 100 is taken as the outer side.

In other embodiments, there may exist other winding forms so that a difference between the number of layers of the electrode sheet in any two areas is 0.

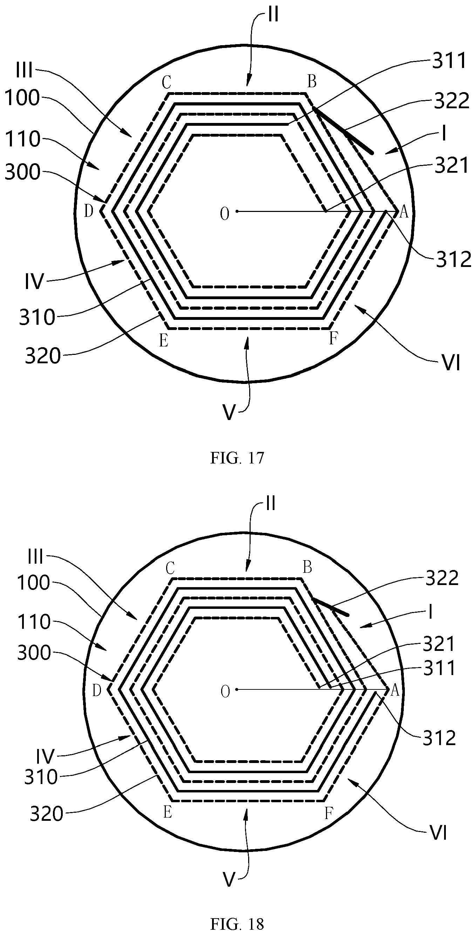

For example, as shown in FIG. 17, FIG. 17 shows a projection of the first electrode sheet 310 and the second electrode sheet 320, the first electrode sheet's winding initial end 311 is in the area II, the first electrode sheet's winding closing end 312 is in the area VI, the second electrode sheet's winding initial end 321 is in the area I, and the second electrode sheet's winding closing end 322 is also in the area I. It can be seen from FIG. 17 that the number of the layers of the electrode sheet in each area is the same at this time, which is five.

It should be noted that the number of layers of the electrode sheet in a certain area refers to a sum of the number of layers of the first electrode sheet 310 in said area and the number of layers of the second electrode sheet 320 in said area. Each time the first electrode sheet 310 reaches or passes through one area, one layer of the first electrode sheet 310 is stacked in said area, and the number of layers of the first electrode sheet 310 is increased by one; similarly, each time the second electrode sheet 320 reaches or passes through one area, one layer of the second electrode sheet 320 is stacked in said area, and the number of layers of the second electrode sheet 320 is increased by one.

When a difference between the number of layers of the electrode sheet in each area is 0, the number of layers the electrode sheet being stacked in each area is the same, so that a distance between each vertex and the inner wall of the housing 100 is approximately the same. When the electrode assembly 300 expands, each vertex receives a similar reaction force so as to avoid an overlarge stress due to a certain vertex relatively extremely approaches the inner wall of the housing 100, so as to prevent overpressure or facture of the electrode sheet due to stress concentration at the vertex.

When the projection of the electrode assembly 300 is set to be a regular polygon and the number of layers of the electrode sheet in each area is the same, the wound-formed electrode assembly 300 is relatively closer to the set regular polygon, so as to improve an internal space utilization of the accommodating cavity 110 and improve the energy density of the battery cell 45.

In order to prevent a phenomenon of lithium plating, after the first electrode sheet 310 is closed, the second electrode sheet 320 continues to be wound to have the enough remaining amount of the negative electrode to prevent ion from being precipitated after being de-intercalated from the first electrode sheet 310 and not being intercalated into the second electrode sheet 320. At this time, the difference between the number of layers of the electrode sheet in any two areas may not be 0. In order to take into account purposes of preventing an excessive stress concentration and ensuring an internal space utilization, in other embodiments, it can be set that the difference between the number of layers of the electrode sheet in any two areas is 1. For example, in FIG. 18, FIG. 18 shows a projection of the first electrode sheet 310 and the second electrode sheet 320. The first electrode sheet's winding initial end 311 and the second electrode sheet's winding initial end 321 are both in the area I, the first electrode sheet's winding closing end 312 is in the area VI adjacent to the area I, and the second electrode sheet's winding closing end 322 continues to be wound to the area I and stops after passing through the area VI. At this time, the number of layers of the electrode sheet in the area I is one more than the number of layers of the electrode sheet in other areas.

In other embodiments, there may be other winding forms so that the difference between the number of layers of the electrode sheet in any two areas is 0 or 1. The area where the first electrode sheet's winding initial end 311 is located, the area where the second electrode sheet's winding initial end 321 is located, the area where the first electrode sheet's winding closing end 312 is located, and the area where the second electrode sheet's winding closing end 322 is located may be the same, or also be different or partially the same.

In some embodiments, an edge of the first electrode sheet's winding closing end 312 is not on any first straight line, and an edge of the second electrode sheet's winding closing end 322 is not on any first straight line.

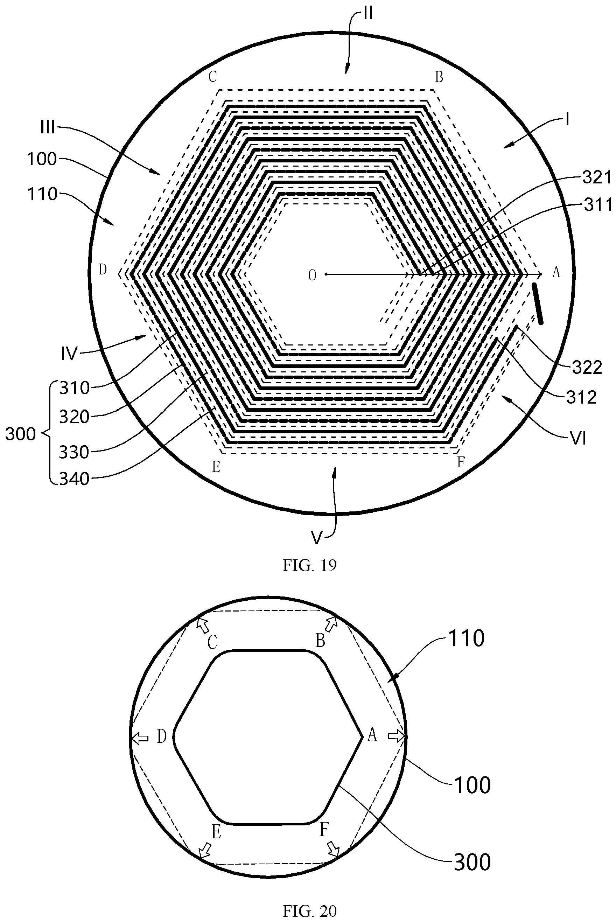

As shown in FIG. 19, FIG. 19 shows a projection of the first electrode sheet 310 and the second electrode sheet 320, and an edge of the first electrode sheet's winding closing end 312 and an edge of the second electrode sheet's winding closing end 322 are both in the area VI, but not on the first straight line AO.

Since when the first electrode sheet 310 or the second electrode sheet 320 winds, each time it reaches or passes through a certain first straight line, the first straight line may increase a length of one layer of thickness of the electrode sheet, and the projection of the electrode assembly 300 and the diameter of its circumscribed circle Ci may also increase accordingly. Therefore, compared with a case that an edge of the first electrode sheet's winding closing end 312 and an edge of the second electrode sheet's winding closing end 322 are both on the first straight line AO, when an edge of the first electrode sheet's winding closing end 312 and an edge of the second electrode sheet's winding closing end 322 are not on the first straight line AO, the number of layers of the electrode sheet in each area does not change (still nine layers), and the reduction of energy density is less or even basically remained the same. However, a distance between a vertex A and the inner wall of the housing 100 is relatively reduced, so that the diameter of the circumscribed circle Ci is relatively reduced, which is equivalent to improving the energy density without increasing the group margin, and further taking into account the purposes of facilitating assembly and improving the energy density.

In the case that the difference in the number of layers of the electrode sheet in any two areas is 0, an edge of the first electrode sheet's winding closing end 312 and an edge of the second electrode sheet's winding closing end 322 are not on the first straight line, and there is a function of ensuring that the distance between each vertex and the inner wall of the housing 100 is approximately the same. Taking FIG. 19 as an example, since the number of layers is not increased at the vertex A when closing, a first straight line AO, a first straight line BO, a first straight line CO, a first straight line DO, a first straight line EO, and a first straight line FO all have nine layers of the electrode sheet, which further ensures that the distance between a vertex A, a vertex B, a vertex C, a vertex D, a vertex E, and a vertex F and the inner wall of the housing 100 is approximately the same, so as to ensure that the reaction force received by the vertex A, the vertex B, the vertex C, the vertex D, the vertex E, and the vertex F is equal when an outer circumferential surface of the electrode assembly 300 abuts against the inner wall of the housing 100 to avoid damages due to the excessive local stress at a certain vertex.

In some embodiments, an edge of the first electrode sheet's winding initial end 311 is not on any first straight line, and an edge of the second electrode sheet's winding initial end 321 is not on any first straight line.

When an edge of the winding initial end is on the first straight line, an end face of the winding initial end may abut on a surface of the electrode sheet in an adjacent area, which causes the end face of the winding initial end to be easily rubbed, resulting in powder loss of a coating layer near the end surface, or resulting in the powder loss of the surface of the electrode sheet abutted by the end face. Taking FIG. 19 as an example, in FIG. 19, a spacing between the electrode sheets is enlarged for ease of viewing, the actual dimension of the spacing between the electrode sheets is very small. Since an edge of the winding initial end of the first electrode sheet 310 is on the first straight line AO, an end face of the winding initial end of the first electrode sheet 310 may contact with a surface of the second electrode sheet 320 of an innermost layer in the area VI, and an end face of the first electrode sheet's winding initial end 311 is easy to be rubbed, resulting in powder loss of the coating layer near a contact part; similarly, assuming that an edge of the winding initial end of the second electrode sheet 320 is on the first straight line AO, an end face of the winding initial end of the electrode sheet 320 may contact with the surface of the second electrode sheet 320 of the innermost layer in the area VI, and an end face of the second electrode sheet's winding initial end 321 is easy to be rubbed, resulting in powder loss of the coating layer near the contact part

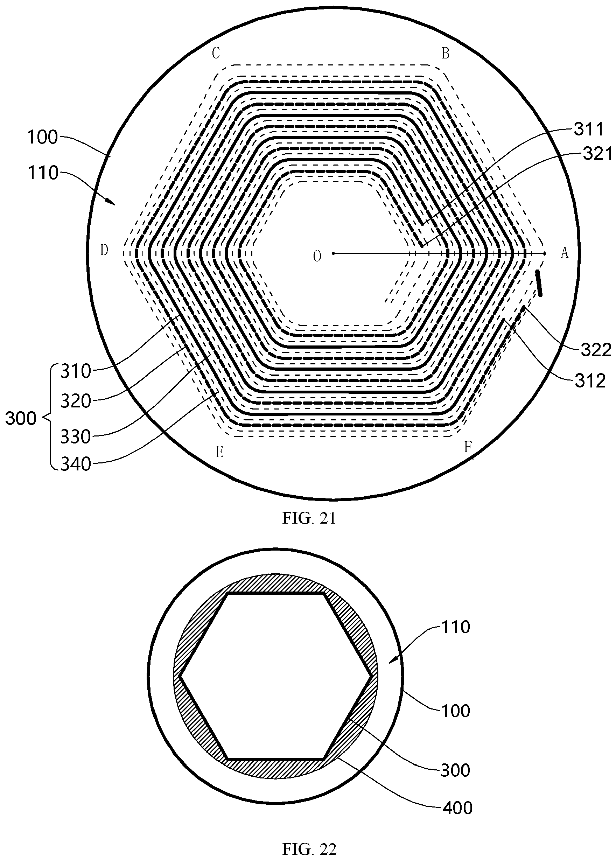

As shown in FIG. 21, by making an edge of the first electrode sheet's winding initial end 311 and an edge of the second electrode sheet's winding initial end 321 not on the first straight line AO, neither the end face of the first electrode sheet's winding initial end 311 nor the end face of the second electrode sheet's winding initial end 321 abuts against the surface of the second electrode sheet 320 of the innermost layer in the area VI, resulting in no powder loss of the coating layer near the end surface of the winding initial end. The coating layer on the electrode sheet is generally an active material layer, the powder loss of the coating layer can lead to lithium plating and affect the cycle life of the battery cell 45. Therefore, by making an edge of the first electrode sheet's winding initial end 311 and an edge of the second electrode sheet's winding initial end 321 not on the first straight line AO, it can prevent lithium plating and effectively improve the cycle life of the battery cell 45.

In some embodiments, an edge of the first electrode sheet's winding initial end 311, an edge of the second electrode sheet's winding initial end 321, an edge of the first electrode sheet's winding closing end 312, and an edge of the second electrode sheet's winding closing end 322 are not on the same diameter of the circumscribed circle Ci to avoid a local stress concentration due to step overlapping at local positions, and at the same time to avoid the thickness at the overlapping positions of steps being larger than other parts, so as to better use internal space and improve the internal space utilization to improve the energy density.

In some embodiments, the electrode assembly 300 is provided with a reel. The reel mentioned here refers to a polygonal cylinder arranged on an axis of the electrode assembly 300 to facilitate winding and forming of the electrode assembly 300. A number of edges or sides of the polygonal cylinder is the same as the number of edges of the set polygon, and the first electrode sheet 310 and the second electrode sheet 320 are wound around the reel to form the electrode assembly 300 with the same projected shape as the size of the set polygon.

When the electrode assembly 300 is coaxially provided with a reel for facilitating winding, an edge of the winding initial end of the electrode sheet has no activity margin for a slight deform towards inside, and if the edge of the winding initial end of the electrode sheet is on the first straight line, a length of the first straight line may also increase. Therefore, in this case, the edge of the winding initial end is not on the first straight line, which also has no function of increasing the length of the first straight line, thereby no function of increasing the diameter of the circumscribed circle Ci, so as to further improve the energy density without increasing the group margin; in some cases, it also has the function of ensuring that the distance between each vertex and the inner wall of the housing 100 is approximately the same, so that the reaction force received by each vertex is the same to avoid the electrode sheet being over compressed caused by the excessive local stress at a certain vertex.

In order to further alleviate the problem of stress concentration at the vertex, in some embodiments, two adjacent edges of the projection of the electrode assembly 300 have a smooth transition.

The smooth transition between two adjacent edges makes the vertex of the polygon a fillet, forming an arc face, and a contact area between the arc face and an inner wall of the cylindrical housing 100 is larger. As shown in FIG. 20, FIG. 20 takes a regular hexagon as an example to show a schematic diagram of a projection when the electrode assembly 300 expands. A dotted line in FIG. 12 is a projection of the expanded electrode assembly 300, and in FIG. 20, there is a non-smooth transition at the vertex A, and there are smooth transitions at the vertex B, the vertex C, the vertex D, the vertex E and the vertex F. By comparison, it can be seen that when the electrode assembly 300 expands to abut against the inner wall of the housing 100, the arc face formed at a smooth transition position basically completely contacts with the inner wall of the cylindrical housing 100, in other words, the contact area at the vertex B, the vertex C, the vertex D, the vertex E, and the vertex F is larger than that at the vertex A. Therefore, a force bearing area at the vertex of the smooth transition increases while an internal force per unit area decreases, that is, the stress is reduced, which alleviates the problem of the local stress concentration, further prevents the excessive compression of the electrode sheet, and alleviates the performance degradation of the battery cell caused by the excessive compression of the electrode sheet, thereby improving the cycle life of the battery cell.

When winding, as shown in FIG. 21, FIG. 21 shows a projection of the first electrode sheet 310 and the second electrode sheet 320. The first electrode sheet 310 and the second electrode sheet 320 turn at the first straight line to change the winding direction, which refers that the first electrode sheet 310 or the second electrode sheet 320 turn along one edge of the polygon to the other edge of the polygon, and the first electrode sheet 310 and the second electrode sheet 320 form fillets at each turning so that each vertex is an arc face. When the electrode sheet is processed in a manner other than winding to form the electrode assembly 300, such as stacking forming, a heat pressing or the like can be utilized to achieve a smooth transition between the two adjacent edges of the projection of the electrode assembly 300.

In an actual forming process of the electrode assembly 300, due to process instability, the electrode assembly 300 may not be a perfect regular polygon. An apex angle of the polygon can have a manufacturing tolerance of ±10%, and when the apex angle forms the fillet: 0.9*(180°-360°/n)≤ϕ≤1.10*(180°-360°/n), where Φ is an angle between extension lines of the two adjacent edges of the polygon, n is the number of edges of the polygon.

When the electrolyte of the battery cell 45 is an electrolytic solution, an electronic insulating layer is also arranged between the first electrode sheet 310 and the second electrode sheet 320, and the electronic insulating layer may be a membrane.

As shown in FIG. 21, a length of a first membrane 330 and a second membrane 340 is larger than a length of the first electrode sheet 310 and the second electrode sheet 320, respectively. The second membrane 340, the second electrode sheet 320, the first membrane 330 and the first electrode sheet 310 are stacked in sequence before being wound. After being stacked, an edge of the first electrode sheet's winding initial end 311 exceeds an edge of the second electrode sheet's winding initial end 321, and an edge of the winding initial end of the first membrane 330 and an edge of the winding initial end of the second membrane 340 exceed an edge of the first electrode sheet's winding initial end 311, respectively.

After being wound, the second electrode sheet 320 is at the innermost layer, and at least the second membrane 340 covers the innermost layer. An inner side of the first electrode sheet 310 and an outer side of the second electrode sheet 320 are separated by the first membrane 330, and an outer side of the first electrode sheet 310 and an inner side of the second electrode sheet 320 are separated by the second membrane 340

After the winding of the first electrode sheet 310 and the second electrode sheet 320 is finished, the first membrane 330 and the second membrane 340 continues to be wound to cover the first electrode sheet's winding closing end 312 and the second electrode sheet's winding closing end 322.

The more turns the membrane is wound around the outer circumference of the electrode assembly 300, the better the binding performance to the electrode assembly 300 to prevent an internal resistance increase due to the loose of the electrode sheet, thereby avoiding the performance degradation of the battery caused by an internal resistance increase, so as to ensure the cycle life of the battery. In order to preferably wrap the electrode assembly 300 to prevent the loose of first electrode sheet 310 and the second electrode 320 and an excessive interval, at least one of the first membrane 330 and the second membrane 340 continues to be wound 0.25-5 turns after covering the first electrode sheet's winding closing end 312 and the second electrode sheet's winding closing end 322.

However, the excessive number of winding turns of the membrane may occupy space between the electrode assembly 300 and the inner wall of the housing 100, in order to take into account both a wrapping effect and a space occupation problem, in some embodiments, at least one of the first membrane 330 and the second membrane 340 continues to be wound 1.25-2 turns after covering the first electrode sheet's winding closing end 312 and the second electrode sheet's winding closing end 322.

In order to further wrap the electrode assembly 300 so as to avoid an interface difference, and at the same time to avoid occupying the space due to the excessive number of the winding turns of the membrane, in some embodiments, as shown in FIG. 22, FIG. 22 shows a view of a projection of the electrode assembly 300, and a binding layer 400 is arranged on the outside of the wound electrode assembly 300. The binding layer 400 is used to wrap the electrode assembly 300 to prevent the first electrode sheet 310 and the second electrode sheet 320 from loosening, and to prevent deformation due to the loose, so that the electrode assembly 300 maintains its set polygonal shape. Moreover, the binding layer 400 has elasticity to allow the electrode assembly 300 to expand, that is, as the electrode assembly 300 expands outward, the binding layer 400 expands outward simultaneously, which prevents the electrode sheet from being over extruded by the binding layer 400 while preventing the electrode sheet from loosening.

In the figures of the present application, to facilitate an observation, a thickness of the binding layer 400 is enlarged, which is only an illustration and does not represent an actual thickness of the binding layer 400, nor does it represent a size ratio of a projection of the binding layer 400 to the projection of the electrode assembly 300.

In some embodiments, the binding layer 400 possessing elasticity may be made of materials such as condensation polymer of terephthalic acid and ethylene glycol, or be made of pressure-sensitive adhesive, and a selection range of adhesive strength of the pressure-sensitive adhesive is being larger than 0.1 N/mm.

In some embodiments, the binding layer 400 is a sleeve, and the sleeve is sleeved on the outside of the electrode assembly 300.

In order to further prevent the electrode assembly 300 from being deadlocked, in some embodiments, there is an interval between an inner wall of the binding layer 400 and the inner wall of the housing 100, and the interval can further provide more remaining space for the expansion of the electrode assembly 300.

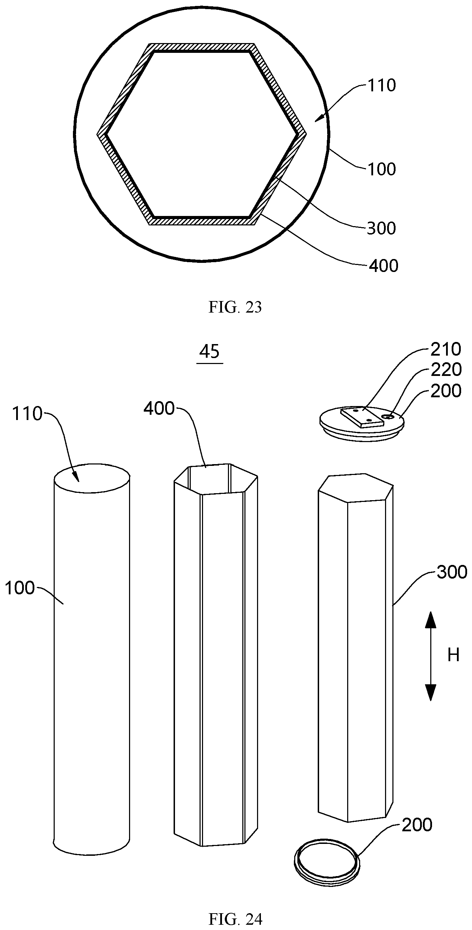

After the electrode assembly 300 is expanded, the electrode assembly 300 indirectly contacts with the inner wall of the housing 100 through the binding layer 400. In order to further prevent the electrode assembly 300 from being deadlocked, as shown in FIG. 23, FIG. 23 shows a projection view of the electrode assembly 300, and a three-dimensional shape formed by the binding layer 400 after being sleeved on the outside of the electrode assembly 300 is the same as the three-dimensional shape of the electrode assembly 300.

In some embodiments, the three-dimensional shape of the binding layer 400 when it is not sleeved on the outside of the electrode assembly 300 is different from the three-dimensional shape of the electrode assembly 300. Due to its elasticity, the three-dimensional shape formed by the binding layer 400 after being sleeved on the outside of the electrode assembly 300 is the same as the three-dimensional shape of the electrode assembly 300.

In other embodiments, the three-dimensional shape of the binding layer 400 when it is not sleeved on the outside of the electrode assembly 300 is the same as the three-dimensional shape of the electrode assembly 300. As shown in FIG. 24, FIG. 24 shows an exploded view of the battery cell 45, where the electrode assembly 300 is a regular hexagonal prism, and the binding layer 400 is a regular hexagonal prism. In other embodiments, when the electrode assembly 300 is of other three-dimensional shapes, the binding layer 400 is of the same other three-dimensional shapes.

In some embodiments, as shown in FIG. 24, an outer shape of the housing 100 is configured to be cylindrical, and correspondingly, a projection of an end cover assembly 200 along the height direction H of the battery cell is a circle.

When a projection of the outer shape of the end cover assembly 200 along the height direction H of the battery cell is a polygon, at least an edge of the housing 100 at the opening is also the same polygon. The housing 100 and the end cover assembly 200 need to be aligned when assembling, so that vertexes and edges of the projections of the two can overlap; the housing 100 and the end cover assembly 200 need to be welded and fixed after the alignment, and when welding, it is necessary to stop the welding gun and change a welding direction at each vertex of the polygon. However, the cylindrical housing 100 and the end cover assembly 200 with a circular projection do not need to be aligned when assembling and can be directly covered. It can be welded along a circular path at one time without a pause when welding, which reduces difficulty of assembly, improves efficiency of assembly and reduces man-hour costs.

The battery cell 45 and the battery 4 of the embodiments of the present application are described above, and the power consumption device is described by taking the vehicle 1 as an example. A method and an apparatus for producing a battery cell 45 according to the embodiments of the present application will be described below. For the parts that are not described in detail, reference is made to the foregoing embodiments.

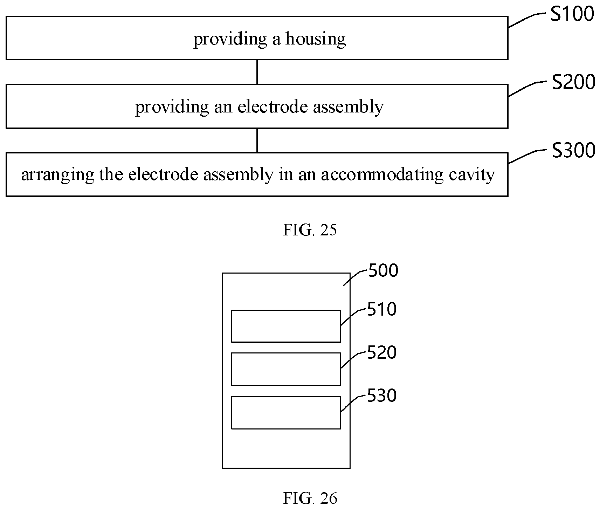

FIG. 25 shows a schematic flowchart of a method for producing a battery cell 45 according to an embodiment of the present application, and the method can include:
S 100, providing a housing 100, and the housing 100 has a cylindrical accommodating cavity 110;
S200, providing an electrode assembly 300, and a projection of the electrode assembly 300 along a height direction H of the battery cell is a polygon; and
S300, arranging the electrode assembly 300 in the accommodating cavity 110.

FIG. 26 shows a schematic block diagram of an apparatus 500 for producing a battery cell 45 according to an embodiment of the present application, and the preparing apparatus 500 can include: a first providing apparatus 510, a second providing apparatus 520, and an assembling apparatus 530.

A first providing apparatus 510 is used to provide a housing 100, and the housing 100 has a cylindrical accommodating cavity 110;

A second providing apparatus 520 is used to provide an electrode assembly 300, and a projection of the electrode assembly 300 along a height direction H of the battery cell is a polygon; and

An assembling apparatus 530 is used to arrange the electrode assembly 300 in the accommodating cavity 110.

The foregoing descriptions are only better embodiments of the present application, and are not intended to limit the present application. For those skilled in the art, the present application may have various modifications and changes within the scope of the appended claims.

## Claims

1. A battery cell (45), comprising:
a housing (100), with a cylindrical accommodating cavity (110);
an electrode assembly (300), arranged in the accommodating cavity (110), and a projection of the electrode assembly (300) along a height direction (H) of the battery cell (45) is a polygon, a remaining space is provided between the electrode assembly (300) and an inner wall of the housing (100) to allow the electrode assembly (300) to expand; **characterized in**
a binding layer (400), configured to wrap the electrode assembly (300), and the binding layer (400) has elasticity to allow the electrode assembly (300) to expand, there is an interval between the binding layer (400) and an inner wall of the housing (100).

2. The battery cell (45) according to claim 1, wherein a shape of any cross section of the electrode assembly (300) perpendicular to the height direction (H) of the battery cell (45) is a polygon.

3. The battery cell (45) according to any one of claims 1-2, wherein a three-dimensional shape of the electrode assembly (300) is a prism, or a regular prism.

4. The battery cell (45) according to any one of claims 1-3, wherein two adjacent edges of the projection of the electrode assembly (300) possess a smooth transition to make the vertex of the polygon a fillet.

5. The battery cell (45) according to any one of claims 1-4, wherein a ratio of a diameter of a circumscribed circle of the projection of the electrode assembly (300) to a diameter of the accommodating cavity (110) is 90%- <100%.

6. The battery cell (45) according to any one of claims 1-5, wherein the electrode assembly (300) comprises a first electrode sheet (310) and a second electrode sheet (320) with an opposite electrical polarity to the first electrode sheet (310), and the first electrode sheet (310) and the second electrode sheet (320) are wound to form the electrode assembly (300); and
a connecting line between any vertex of the projection of the electrode assembly (300) and a center of the circumscribed circle of the projection of the electrode assembly (300) is defined as a first straight line, a projection of an edge of the first electrode sheet's winding closing end (312) along the height direction (H) of the battery cell (45) is not on any first straight line, and a projection of an edge of the second electrode sheet's winding closing end (322) along the height direction (H) of the battery cell (45) is not on any first straight line.

7. The battery cell (45) according to any one of claims 1-6, wherein the electrode assembly (300) comprises a first electrode sheet (310) and a second electrode sheet (320) with opposite electrical polarity to the first electrode sheet (310), and the first electrode sheet (310) and the second electrode sheet (320) are wound to form the electrode assembly (300); and
a connecting line between any vertex of the projection of the electrode assembly (300) and a center of the circumscribed circle of the projection of the electrode assembly (300) is defined as a first straight line, a projection of an edge of the first electrode sheet's winding initial end (311) along the height direction (H) of the battery cell (45) is not on any first straight line, and a projection of an edge of the second electrode sheet's winding initial end (321) along the height direction (H) of the battery cell (45) is not on any first straight line.

8. The battery cell (45) according to any one of claims 1-7, wherein the electrode assembly (300) comprises a first electrode sheet (310) and a second electrode sheet (320) with opposite electrical polarity to the first electrode sheet (310), and the first electrode sheet (310) and the second electrode sheet (320) are wound to form the electrode assembly (300); and
a connecting line between any vertex of the projection of the electrode assembly (300) and a center of the circumscribed circle of the projection of the electrode assembly (300) is defined as a first straight line, the projection of the electrode assembly (300) is divided into a plurality of areas by a plurality of first straight lines, and a difference between a number of layers of the electrode sheet in any two areas is less than or equal to 1.

9. The battery cell (45) according to claim 8, wherein the projection of an edge of the first electrode sheet's winding initial end (311) along the height direction (H) of the battery cell (45) and the projection of an edge of the first electrode sheet's winding closing end (312) along the height direction (H) of the battery cell (45) are located in two adjacent areas, and the projection of an edge of the second electrode sheet's winding initial end (321) along the height direction (H) of the battery cell (45) and the projection of an edge of the second electrode sheet's winding closing end (322) along the height direction (H) of the battery cell (45) are located in two adjacent areas.

10. The battery cell (45) according to any one of claims 1-9, wherein the binding layer (400) is a sleeve, and the binding layer (400) is sleeved on the outside of the electrode assembly (300).

11. The battery cell (45) according to claim 10, wherein a three-dimensional shape formed by the binding layer (400) sleeved on the outside of the electrode assembly (300) is the same as the three-dimensional shape of the electrode assembly (300).

12. A battery (4), comprising the battery cell (45) according to any one of claims 1-11.

13. A power consumption device, comprising the battery (4) according to claim 12.

14. A method for producing a battery cell (45), comprising:
providing a housing (100), wherein the housing (100) has a cylindrical accommodating cavity (110);
providing an electrode assembly (300), and a projection of the electrode assembly (300) along a height direction (H) of the battery cell (45) is a polygon, a remaining space is provided between the electrode assembly (300) and an inner wall of the housing (100) to allow the electrode assembly (300) to expand;
**characterized in**
providing a binding layer (400), configured to wrap the electrode assembly (300), and the binding layer (400) has elasticity to allow the electrode assembly (300) to expand, there is an interval between the binding layer (400) and an inner wall of the housing (100); and
arranging the electrode assembly (300) in the accommodating cavity (110).

15. An apparatus for producing a battery cell (45), comprising:
a first providing apparatus (510), configured to provide a housing (100), and the housing (100) has a cylindrical accommodating cavity (110);
a second providing apparatus (520), configured to provide an electrode assembly (300), and a projection of the electrode assembly (300) along a height direction (H) of the battery cell (45) is a polygon, a remaining space is provided between the electrode assembly (300) and an inner wall of the housing (100) to allow the electrode assembly (300) to expand;
**characterized in that** the second providing apparatus is further configured to provide a binding layer (400) configured to wrap the electrode assembly (300), and the binding layer (400) has elasticity to allow the electrode assembly (300) to expand, there is an interval between the binding layer (400) and an inner wall of the housing (100); and
an assembling apparatus (530), configured to arrange the electrode assembly (300) in the accommodating cavity (110).

## Patentansprüche

1. Batteriezelle (45), umfassend:
ein Gehäuse (100), mit einem zylindrischen Aufnahmehohlraum (110) ;
eine Elektrodenbaugruppe (300), die in dem Aufnahmehohlraum (110) angeordnet ist, wobei eine Projektion der Elektrodenbaugruppe (300) entlang einer Höhenrichtung (H) der Batteriezelle (45) ein Vieleck ist, wobei zwischen der Elektrodenbaugruppe (300) und einer Innenwand des Gehäuses (100) ein verbleibender Raum bereitgestellt ist, damit sich die Elektrodenbaugruppe (300) ausdehnen kann; **gekennzeichnet durch** eine Bindeschicht (400), die so konfiguriert ist, dass sie die Elektrodenbaugruppe (300) umhüllt, wobei die Bindeschicht (400) eine Elastizität aufweist, um der Elektrodenbaugruppe (300) zu ermöglichen, sich auszudehnen, wobei zwischen der Bindeschicht (400) und einer Innenwand des Gehäuses (100) ein Zwischenraum vorhanden ist.

2. Batteriezelle (45) nach Anspruch 1, wobei eine Form eines beliebigen Querschnitts der Elektrodenbaugruppe (300) senkrecht zur Höhenrichtung (H) der Batteriezelle (45) ein Vieleck ist.

3. Batteriezelle (45) nach einem der Ansprüche 1 und 2, wobei eine dreidimensionale Form der Elektrodenbaugruppe (300) ein Prisma oder ein regelmäßiges Prisma ist.

4. Batteriezelle (45) nach einem der Ansprüche 1 bis 3, wobei zwei benachbarte Ränder der Projektion der Elektrodenbaugruppe (300) einen sanften Übergang aufweisen, so dass die Ecke des Vielecks eine Rundung bildet.

5. Batteriezelle (45) nach einem der Ansprüche 1 bis 4, wobei ein Verhältnis eines Durchmessers eines die Projektion der Elektrodenbaugruppe (300) umschreibenden Kreises zu einem Durchmesser des Aufnahmehohlraums (110) 90 bis <100% beträgt.

6. Batteriezelle (45) nach einem der Ansprüche 1 bis 5, wobei die Elektrodenbaugruppe (300) eine erste Elektrodenfolie (310) und eine zweite Elektrodenfolie (320) mit einer zur ersten Elektrodenfolie (310) entgegengesetzten elektrischen Polarität umfasst und die erste Elektrodenfolie (310) und die zweite Elektrodenfolie (320) zur Bildung der Elektrodenbaugruppe (300) gewickelt sind; und
eine Verbindungslinie zwischen einer beliebigen Ecke der Projektion der Elektrodenbaugruppe (300) und einem Mittelpunkt des die Projektion der Elektrodenbaugruppe (300) umschreibenden Kreises als eine erste gerade Linie definiert ist, eine Projektion eines Randes des Wicklungsschlussendes (312) der ersten Elektrodenfolie entlang der Höhenrichtung (H) der Batteriezelle (45) nicht auf einer ersten geraden Linie liegt, und eine Projektion eines Randes des Wicklungsschlussendes (322) der zweiten Elektrodenfolie entlang der Höhenrichtung (H) der Batteriezelle (45) nicht auf einer ersten geraden Linie liegt.

7. Batteriezelle (45) nach einem der Ansprüche 1 bis 6, wobei die Elektrodenbaugruppe (300) eine erste Elektrodenfolie (310) und eine zweite Elektrodenfolie (320) mit einer zur ersten Elektrodenfolie (310) entgegengesetzten elektrischen Polarität umfasst und die erste Elektrodenfolie (310) und die zweite Elektrodenfolie (320) zur Bildung der Elektrodenbaugruppe (300) gewickelt sind; und
eine Verbindungslinie zwischen einer beliebigen Ecke der Projektion der Elektrodenbaugruppe (300) und einem Mittelpunkt des die Projektion der Elektrodenbaugruppe (300) umschreibenden Kreises (300) als eine erste gerade Linie definiert ist, eine Projektion eines Randes des Wicklungsanfangsendes (311) der ersten Elektrodenfolie entlang der Höhenrichtung (H) der Batteriezelle (45) nicht auf einer ersten geraden Linie liegt und eine Projektion eines Randes des Wicklungsanfangsendes (321) der zweiten Elektrodenfolie entlang der Höhenrichtung (H) der Batteriezelle (45) nicht auf einer ersten geraden Linie liegt.

8. Batteriezelle (45) nach einem der Ansprüche 1 bis 7, wobei die Elektrodenbaugruppe (300) eine erste Elektrodenfolie (310) und eine zweite Elektrodenfolie (320) mit einer zur ersten Elektrodenfolie (310) entgegengesetzten elektrischen Polarität umfasst und die erste Elektrodenfolie (310) und die zweite Elektrodenfolie (320) zur Bildung der Elektrodenbaugruppe (300) gewickelt sind; und
eine Verbindungslinie zwischen einer beliebigen Ecke der Projektion der Elektrodenbaugruppe (300) und einem Mittelpunkt des die Projektion der Elektrodenbaugruppe (300) umschreibenden Kreises als eine erste gerade Linie definiert ist, die Projektion der Elektrodenbaugruppe (300) durch eine Vielzahl erster gerader Linien in eine Vielzahl von Bereichen unterteilt ist und eine Differenz zwischen einer Anzahl an Schichten der Elektrodenfolie in zwei beliebigen Bereichen kleiner als oder gleich 1 ist.

9. Batteriezelle (45) nach Anspruch 8, wobei sich die Projektion eines Randes des Wicklungsanfangsendes (311) der ersten Elektrodenfolie entlang der Höhenrichtung (H) der Batteriezelle (45) und die Projektion eines Randes des Wicklungsschlussendes (312) der ersten Elektrodenfolie entlang der Höhenrichtung (H) der Batteriezelle (45) in zwei benachbarten Bereichen befinden und sich die Projektion eines Randes des Wicklungsanfangsendes (321) der zweiten Elektrodenfolie entlang der Höhenrichtung (H) der Batteriezelle (45) und die Projektion eines Randes des Wicklungsschlussendes (322) der zweiten Elektrodenfolie entlang der Höhenrichtung (H) der Batteriezelle (45) in zwei benachbarten Bereichen befinden.

10. Batteriezelle (45) nach einem der Ansprüche 1 bis 9, wobei die Bindeschicht (400) eine Hülse ist und die Bindeschicht (400) auf der Außenseite der Elektrodenbaugruppe (300) übergestülpt ist.

11. Batteriezelle (45) nach Anspruch 10, wobei eine dreidimensionale Form, die durch die auf der Außenseite der Elektrodenbaugruppe (300) übergestülpte Bindeschicht (400) gebildet wird, dieselbe ist wie die dreidimensionale Form der Elektrodenbaugruppe (300).

12. Batterie (4), umfassend die Batteriezelle (45) nach einem der Ansprüche 1 bis 11.

13. Leistung aufnehmende Vorrichtung, umfassend die Batterie (4) nach Anspruch 12.

14. Verfahren zum Herstellen einer Batteriezelle (45), umfassend:
Bereitstellen eines Gehäuses (100), wobei das Gehäuse (100) einen zylindrischen Aufnahmehohlraum (110) aufweist;
Bereitstellen einer Elektrodenbaugruppe (300), wobei eine Projektion der Elektrodenbaugruppe (300) entlang einer Höhenrichtung (H) der Batteriezelle (45) ein Polygon ist, wobei zwischen der Elektrodenbaugruppe (300) und einer Innenwand des Gehäuses (100) ein verbleibender Raum bereitgestellt ist, damit sich die Elektrodenbaugruppe (300) ausdehnen kann;
**gekennzeichnet durch**
Bereitstellen einer Bindeschicht (400), die so konfiguriert ist, dass sie die Elektrodenbaugruppe (300) umhüllt, wobei die Bindeschicht (400) eine Elastizität aufweist, um der Elektrodenbaugruppe (300) zu ermöglichen, sich auszudehnen, wobei zwischen der Bindeschicht (400) und einer Innenwand des Gehäuses (100) ein Zwischenraum vorhanden ist; und
Anordnen der Elektrodenbaugruppe (300) in dem Aufnahmehohlraum (110) .

15. Vorrichtung zum Herstellen einer Batteriezelle (45), umfassend:
eine erste Bereitstellungsvorrichtung (510), die so konfiguriert ist, dass sie ein Gehäuse (100) bereitstellt, wobei das Gehäuse (100) einen zylindrischen Aufnahmehohlraum (110) aufweist;
eine zweite Bereitstellungsvorrichtung (520), die so konfiguriert ist, dass sie eine Elektrodenbaugruppe (300) bereitstellt, wobei eine Projektion der Elektrodenbaugruppe (300) entlang einer Höhenrichtung (H) der Batteriezelle (45) ein Polygon ist, wobei zwischen der Elektrodenbaugruppe (300) und einer Innenwand des Gehäuses (100) ein verbleibender Raum bereitgestellt ist, damit sich die Elektrodenbaugruppe (300) ausdehnen kann;
**dadurch gekennzeichnet, dass** die zweite Bereitstellungsvorrichtung ferner so konfiguriert ist, dass sie eine Bindeschicht (400) bereitstellt, die so konfiguriert ist, dass sie die Elektrodenbaugruppe (300) umhüllt, und dass die Bindeschicht (400) eine Elastizität aufweist, um der Elektrodenbaugruppe (300) zu ermöglichen, sich auszudehnen, wobei zwischen der Bindeschicht (400) und einer Innenwand des Gehäuses (100) ein Zwischenraum vorhanden ist; und eine Montagevorrichtung (530), die so konfiguriert ist, dass sie die Elektrodenbaugruppe (300) in dem Aufnahmehohlraum (110) anordnet.

## Revendications

1. Élément de batterie (45), comprenant :
un boîtier (100), avec une cavité de réception (110) cylindrique ;
un ensemble électrode (300), agencé dans la cavité de réception (110), une protubérance de l'ensemble électrode (300) dans le sens d'une hauteur (H) de l'élément de batterie (45) étant un polygone, un espace restant étant situé entre l'ensemble électrode (300) et une paroi intérieure du boîtier (100) pour permettre à l'ensemble électrode (300) de se dilater ;
l'élément de batterie étant **caractérisé par** :
une couche de liaison (400), configurée pour envelopper l'ensemble électrode (300), la couche de liaison (400) étant élastique pour permettre à l'ensemble électrode (300) de se dilater, un intervalle étant prévu entre la couche de liaison (400) et une paroi intérieure du boîtier (100).

2. Élément de batterie (45) selon la revendication 1, dans lequel une forme d'une quelconque section transversale de l'ensemble électrode (300) perpendiculaire au sens de la hauteur (H) de l'élément de batterie (45) est un polygone.

3. Élément de batterie (45) selon l'une quelconque des revendications 1 et 2, dans lequel une forme tridimensionnelle de l'ensemble électrode (300) est un prisme ou un prisme régulier.

4. Élément de batterie (45) selon l'une quelconque des revendications 1 à 3, dans lequel deux bords adjacents de la protubérance de l'ensemble électrode (300) possèdent une transition progressive pour faire du sommet du polygone un congé.

5. Élément de batterie (45) selon l'une quelconque des revendications 1 à 4, dans lequel un rapport entre un diamètre d'un cercle circonscrit de la protubérance de l'ensemble électrode (300) et un diamètre de la cavité de réception (110) est compris entre 90 % et <100 %.

6. Élément de batterie (45) selon l'une quelconque des revendications 1 à 5, dans lequel l'ensemble électrode (300) comprend une première feuille d'électrode (310) et une seconde feuille d'électrode (320) dont la polarité électrique est opposée à celle de la première feuille d'électrode (310), la première feuille d'électrode (310) et la seconde feuille d'électrode (320) étant enroulées pour former l'ensemble électrode (300) ; et
dans lequel une ligne de jonction entre un sommet quelconque de la protubérance de l'ensemble électrode (300) et un centre du cercle circonscrit de la protubérance de l'ensemble électrode (300) est définie comme une première ligne droite, une protubérance d'un bord de l'extrémité finale d'enroulement (312) de la première feuille d'électrode dans le sens de la hauteur (H) de l'élément de batterie (45) n'étant pas sur une quelconque première ligne droite, et une protubérance d'un bord de l'extrémité finale d'enroulement de la seconde feuille d'électrode (322) dans le sens de la hauteur (H) de l'élément de batterie (45) n'étant pas sur une quelconque première ligne droite.

7. Élément de batterie (45) selon l'une quelconque des revendications 1 à 6, dans lequel l'ensemble électrode (300) comprend une première feuille d'électrode (310) et une seconde feuille d'électrode (320) dont la polarité électrique est opposée à celle de la première feuille d'électrode (310), la première feuille d'électrode (310) et la seconde feuille d'électrode (320) étant enroulées pour former l'ensemble électrode (300) ; et
dans lequel une ligne de jonction entre un sommet quelconque de la protubérance de l'ensemble électrode (300) et un centre du cercle circonscrit de la protubérance de l'ensemble électrode (300) est définie comme une première ligne droite, une protubérance d'un bord de l'extrémité initiale d'enroulement (311) de la première feuille d'électrode dans le sens de la hauteur (H) de l'élément de batterie (45) n'étant pas sur une quelconque première ligne droite, et une protubérance d'un bord de l'extrémité initiale d'enroulement de la seconde feuille d'électrode (321) dans le sens de la hauteur (H) de l'élément de batterie (45) n'étant pas sur une quelconque première ligne droite.

8. Élément de batterie (45) selon l'une quelconque des revendications 1 à 7, dans lequel l'ensemble électrode (300) comprend une première feuille d'électrode (310) et une seconde feuille d'électrode (320) dont la polarité électrique est opposée à celle de la première feuille d'électrode (310), la première feuille d'électrode (310) et la seconde feuille d'électrode (320) étant enroulées pour former l'ensemble électrode (300) ; et
dans lequel une ligne de jonction entre un sommet quelconque de la protubérance de l'ensemble électrode (300) et un centre du cercle circonscrit de la protubérance de l'ensemble électrode (300) est définie comme une première ligne droite, la protubérance de l'ensemble électrode (300) étant divisée en une pluralité de régions par une pluralité de premières lignes droites, et une différence entre un nombre de couches de la feuille d'électrode dans deux régions quelconques étant inférieure ou égale à 1.

9. Élément de batterie (45) selon la revendication 8, dans lequel la protubérance d'un bord de l'extrémité initiale d'enroulement (311) de la première feuille d'électrode dans le sens de la hauteur (H) de l'élément de batterie (45) et la protubérance d'un bord de l'extrémité finale d'enroulement (312) de la première feuille d'électrode dans le sens de la hauteur (H) de l'élément de batterie (45) sont situées dans deux régions adjacentes, et la protubérance d'un bord de l'extrémité initiale d'enroulement (321) de la seconde feuille d'électrode dans le sens de la hauteur (H) de l'élément de batterie (45) et la protubérance d'un bord de l'extrémité finale d'enroulement (322) de la seconde feuille d'électrode dans le sens de la hauteur (H) de l'élément de batterie (45) sont situées dans deux régions adjacentes.

10. Élément de batterie (45) selon l'une quelconque des revendications 1 à 9, dans lequel la couche de liaison (400) est un manchon, et la couche de liaison (400) est manchonnée à l'extérieur de l'ensemble électrode (300).

11. Élément de batterie (45) selon la revendication 10, dans lequel une forme tridimensionnelle formée par la couche de liaison (400) manchonnée à l'extérieur de l'ensemble électrode (300) est la même que la forme tridimensionnelle de l'ensemble électrode (300).

12. Batterie (4), comprenant l'élément de batterie (45) selon l'une quelconque des revendications 1 à 11.

13. Dispositif de consommation d'énergie, comprenant la batterie (4) selon la revendication 12.

14. Procédé de production d'un élément de batterie (45), comprenant les étapes consistant à :
fournir un boîtier (100), le boîtier (100) comportant une cavité de réception (110) cylindrique ;
fournir un ensemble électrode (300), une protubérance de l'ensemble électrode (300) dans le sens d'une hauteur (H) de l'élément de batterie (45) étant un polygone, un espace restant étant situé entre l'ensemble électrode (300) et une paroi intérieure du boîtier (100) pour permettre à l'ensemble électrode (300) de se dilater ;
le procédé étant **caractérisé par** les étapes consistant à :
fournir une couche de liaison (400), configurée pour envelopper l'ensemble électrode (300), la couche de liaison (400) étant élastique pour permettre à l'ensemble électrode (300) de se dilater, un intervalle étant prévu entre la couche de liaison (400) et une paroi intérieure du boîtier (100) ; et
agencer l'ensemble électrode (300) dans la cavité de réception (110).

15. Appareil de production d'un élément de batterie (45), comprenant :
un premier appareil de fourniture (510), configuré pour fournir un boîtier (100), le boîtier (100) comportant une cavité de réception (110) cylindrique ;
un second appareil de fourniture (520), configuré pour fournir un ensemble électrode (300), une protubérance de l'ensemble électrode (300) dans le sens d'une hauteur (H) de l'élément de batterie (45) étant un polygone, un espace restant étant situé entre l'ensemble électrode (300) et une paroi intérieure du boîtier (100) pour permettre à l'ensemble électrode (300) de se dilater ;
l'appareil de production étant **caractérisé en ce que** le second appareil de fourniture est en outre configuré pour fournir une couche de liaison (400) configurée pour envelopper l'ensemble électrode (300), la couche de liaison (400) étant élastique pour permettre à l'ensemble électrode (300) de se dilater, un intervalle étant prévu entre la couche de liaison (400) et une paroi intérieure du boîtier (100) ; et
un appareil d'assemblage (530), configuré pour agencer l'ensemble électrode (300) dans la cavité de réception (110).
